(19) **Europäisches Patentamt / European Patent Office / Office européen des brevets**

(11) **EP 4 636 034 A1**

(12) **EUROPEAN PATENT APPLICATION**
published in accordance with Art. 153(4) EPC

(43) Date of publication:
**22.10.2025 Bulletin 2025/43**

(21) Application number: **23903569.4**

(22) Date of filing: **14.12.2023**

(51) International Patent Classification (IPC):
*C08L 67/00* (2006.01)   *B32B 27/00* (2006.01)
*B32B 27/30* (2006.01)   *B32B 27/36* (2006.01)
*B65D 65/40* (2006.01)   *B65D 65/46* (2006.01)
*C08F 8/12* (2006.01)   *C08L 29/04* (2006.01)
*C08L 67/02* (2006.01)   *C08L 101/16* (2006.01)
*C09J 129/04* (2006.01)   *C09J 167/00* (2006.01)
*C09J 167/02* (2006.01)

(52) Cooperative Patent Classification (CPC):
**B32B 27/00; B32B 27/30; B32B 27/36;
B65D 65/40; B65D 65/46; C08F 8/12; C08L 29/04;
C08L 67/00; C08L 67/02; C08L 101/16;
C09J 129/04; C09J 167/00; C09J 167/02**

(86) International application number:
**PCT/JP2023/044870**

(87) International publication number:
**WO 2024/128285 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 JP 2022200517
27.06.2023 JP 2023104831**

(71) Applicant: **Kuraray Co., Ltd.
Kurashiki-shi, Okayama 710-0801 (JP)**

(72) Inventors:
• **ENOMOTO, Keisuke
Tokyo 100-0004 (JP)**
• **SEKINE NAITO, Kana
Tsukuba-shi, Ibaraki 305-0841 (JP)**
• **OKOSHI, Taku
Tsukuba-shi, Ibaraki 305-0841 (JP)**

(74) Representative: **D Young & Co LLP
3 Noble Street
London EC2V 7BQ (GB)**

(54) **ADHESIVE RESIN COMPOSITION**

(57)   The present invention relates to an adhesive resin composition including a biodegradable polyester resin (A) and a polyvinyl alcohol resin (B). In the adhesive resin composition, Expression (1): 0.30 < Y/X < 0.99 (1) [in which X represents the mass of the polyvinyl alcohol resin (B) included in a film including the adhesive resin composition and having a thickness of 300 $\mu$m, and Y represents the mass of the polyvinyl alcohol resin (B) extracted in hot water in immersion of the film in pure water at 80°C for 1 hour] is satisfied.

**EP 4 636 034 A1**

**Description**

CROSS-REFERENCE TO RELATED APPLICATIONS

This patent application claims Paris Convention priority to Japanese Patent Application No. 2022-200517 (filing date: December 15, 2022) and Japanese Patent Application No. 2023-104831 (filing date: June 27, 2023), the entire contents of which are incorporated herein by reference.

TECHNICAL FIELD

The present invention relates to an adhesive resin composition, a laminate including an adhesive layer including the adhesive resin composition, and a food packaging material or an agricultural film including the adhesive layer or the laminate.

BACKGROUND ART

Plastic has high formability, strength, water resistance, transparency, and the like, and therefore, has been widely used as packaging materials. However, plastic has poor biodegradability. Dumping of plastic in the natural world after use of the plastic allows the plastic to remain for a long period, and may cause environmental disruption. In contrast, in recent years, biodegradable resins which are to be biodegraded or hydrolyzed in soil or water, and useful for preventing environmental pollution have received attention, and packaging materials and the like using the biodegradable resins have been brought into practical use. Examples of such packaging materials and the like include laminates including biodegradable resin layers, adhesive layers, and polyvinyl alcohol resin layers. For example, Patent Document 1 describes a biodegradable laminate obtained by laminating a polyvinyl alcohol resin layer on at least one surface of a biodegradable resin layer via an adhesive layer including an adhesive composition obtained by graft polymerization of a biodegradable polyester resin with an α,β-unsaturated carboxylic acid or an anhydride thereof.

PRIOR ART DOCUMENTS

PATENT DOCUMENTS

Patent Document 1: JP-A-2013-212682

SUMMARY OF THE INVENTION

PROBLEMS TO BE SOLVED BY THE INVENTION

However, examination by the present inventors revealed that the adhesive layer in the conventional biodegradable laminate is precluded from exhibiting sufficient adhesive strength to both of the polyvinyl alcohol resin layer and the biodegradable resin layer.

Accordingly, an objective of the present invention is to provide an adhesive resin composition excellent in adhesive strength to both of a polyvinyl alcohol resin layer and a biodegradable resin layer, a laminate including an adhesive layer including the adhesive resin composition, and a food packaging material or an agricultural film including the adhesive layer or the laminate.

SOLUTIONS TO THE PROBLEMS

As a result of conducting intensive studies for achieving the object described above, the present inventors found that such a problem as described above can be solved in a case in which a specific parameter (Y/X) in an adhesive resin composition including a biodegradable polyester resin (A) and a polyvinyl alcohol resin (B) is in a specific range. The present invention was thus accomplished. In other words, the present invention encompasses the following preferred aspects.

[1] An adhesive resin composition including a biodegradable polyester resin (A) and a polyvinyl alcohol resin (B), wherein
Expression (1):

$$0.30 \leq Y/X \leq 0.99 \qquad (1)$$

[wherein, X represents a mass of the polyvinyl alcohol resin (B) included in a film including the adhesive resin composition and having a thickness of 300 $\mu$m, and Y represents a mass of the polyvinyl alcohol resin (B) extracted in hot water in extraction treatment of a soluble element by immersing the film in pure water at 80°C for 1 hour]
is satisfied.

[2] The adhesive resin composition according to [1], wherein a saponification degree of the polyvinyl alcohol resin (B) is 75 to 96% by mol.

[3] The adhesive resin composition according to [1] or [2], wherein the biodegradable polyester resin (A) has a breaking elongation of 50% or more, measured according to ISO 527-1.

[4] The adhesive resin composition according to any one of [1] to [3], wherein the polyvinyl alcohol resin (B) has a viscosity average polymerization degree of 100 to 5000.

[5] The adhesive resin composition according to any one of [1] to [4], wherein the biodegradable polyester resin (A) has a melting point of 70°C or more.

[6] The adhesive resin composition according to any one of [1] to [5], wherein the biodegradable polyester resin (A) includes an aromatic-aliphatic copolyester resin.

[7] The adhesive resin composition according to [6], wherein the aromatic-aliphatic copolyester resin is polybutylene adipate terephthalate.

[8] The adhesive resin composition according to any one of [1] to [7], wherein a hole formed in extraction treatment of a soluble element by immersing a film including the adhesive resin composition and having a thickness of 300 $\mu$m in pure water at 80°C for 1 hour has a diameter of 10 $\mu$m or less.

[9] An adhesive resin composition including a biodegradable polyester resin (A) and a polyvinyl alcohol resin (B), wherein the adhesive resin composition includes a co-continuous structure formed of at least a phase consisting of the biodegradable polyester resin (A) and a phase consisting of the polyvinyl alcohol resin (B).

[10] A laminate including an adhesive layer including the adhesive resin composition according to any one of [1] to [9].

[11] The laminate according to [10], including a biodegradable resin layer, the adhesive layer, and a polyvinyl alcohol resin layer in order mentioned.

[12] The laminate according to [11], wherein all of the biodegradable resin layer, the adhesive layer, and the polyvinyl alcohol resin layer satisfy a standard for biodegradability according to ISO 14855.

[13] A food packaging material including an adhesive layer including the adhesive resin composition according to any one of [1] to [9], or the laminate according to any one of [10] to [12].

[14] An agricultural film including an adhesive layer including the adhesive resin composition according to any one of [1] to [9], or the laminate according to any one of [10] to [12].

EFFECTS OF THE INVENTION

An adhesive resin composition of the present invention is excellent in adhesive strength to both of a polyvinyl alcohol resin layer and a biodegradable polyester resin layer. Therefore, the adhesive resin composition can be preferably used in a packaging material for food or the like, and an agricultural film.

BRIEF DESCRIPTION OF THE DRAWINGS

Fig. 1 is an image obtained by photographing, with an SEM, an adhesive resin composition film that has been subjected to hot water treatment in Example 2.

Fig. 2 is an image obtained by photographing, with an SEM, an adhesive resin composition film that has been subjected to hot water treatment in Comparative Example 1.

Fig. 3 is an image obtained by photographing, with an SEM, an adhesive resin composition film that has been subjected to hot water treatment in Example 13.

DETAILED DESCRIPTION

Embodiments of the present invention are described in detail below. The scope of the present invention is not limited to the embodiments described herein. Various modifications to the embodiments can be made without departing from the gist of the present invention.

[Adhesive Resin Composition]

An adhesive resin composition of the present invention includes a biodegradable polyester resin (A) and a polyvinyl alcohol resin (B), wherein
Expression (1):

$$0.30 \leq Y/X \leq 0.99 \qquad (1)$$

[wherein, X represents the mass of the polyvinyl alcohol resin (B) included in a film (which may be referred to as "adhesive resin composition film") including the adhesive resin composition and having a thickness of 300 $\mu$m, and Y represents the mass of the polyvinyl alcohol resin (B) extracted in hot water in the immersion of the film in pure water at 80°C for 1 hour]
is satisfied. Herein, the biodegradable polyester resin (A) may be referred to as " component (A)", the polyvinyl alcohol resin (B) may be referred to as "component (B)", and polyvinyl alcohol may be abbreviated as PVA. Herein, an upper limit value and a lower limit value can be optionally combined.

The adhesive resin composition film for determining X and Y in Expression (1) is obtained by, for example, preheating the pellets of the adhesive resin composition at 180°C for 5 minutes by using a compression forming machine, and then compression-forming the pellets for 30 seconds under a condition of a load of 50 kgf/cm$^2$.
X in Expression (1) represents the mass of the polyvinyl alcohol resin (B) included in the adhesive resin composition film and is determined based on the following Calculation Expression (2) by, for example, cutting the adhesive resin composition film into a 10 mm square to obtain a sample for measurement of a mass, having a length of 10 mm, a width of 10 mm, and a thickness of 300 $\mu$m. The rate of the polyvinyl alcohol resin (B) included in the adhesive resin composition can be determined by, for example, a method in which the adhesive resin composition film is frozen and crushed, and then subjected to hot water treatment, and the mass of the polyvinyl alcohol resin (B) included in a liquid extract is measured.

X = (mass of sample for measurement of mass) $\times$ (rate (% by mass) of  polyvinyl alcohol resin (B) included in adhesive resin composition)/100 $\qquad (2)$

Y in Expression (1) represents the mass of the polyvinyl alcohol resin (B) extracted in hot water in extraction treatment of a soluble element by immersing the adhesive resin composition film in pure water at 80°C for 1 hour. Specifically, in a case in which a component eluted by hot water treatment is only polyvinyl alcohol (B), Y can be determined based on the following Calculation Expression (3) by obtaining a sample (which may be referred to as "sample that has been subjected to hot water treatment") obtained by treatment in which a sample for measurement of a mass is immersed in hot water at 80°C for 1 hour.

Y = (mass of sample for measurement of mass) - (mass of sample that has been subjected to hot water treatment) $\qquad (3)$

In the hot water treatment, for example, the sample for measurement of a mass (about 0.03 g) is put in a 50-cc screw pipe, and 20 mL of distilled water at 23°C is further added into the screw pipe. The screw pipe is put in a hot air drying machine set to 80°C. After 30 minutes, confirmation that the distilled water is at 80°C is performed. Then, the screw pipe is further left to stand for 1 hour. Then, the sample is gently shaken with tweezers in order to remove an eluted component in pores and on surfaces. Then, the sample for measurement of a mass is taken from the screw pipe. In the treatment, the taken sample for measurement of a mass is further put in the hot air drying machine set to 80°C, and left to stand for 1 hour.
Y/X in Expression (1) is demanded by substituting the values of X and Y, obtained as described above. Moreover, X and Y are represented in the same unit. For example, in a case in which the unit of X is a gram (g), the unit of Y is a gram (g). Y/X in Expression (1) can be determined by, for example, a method described in Examples.
The adhesive resin composition of the present invention includes the biodegradable polyester resin (A) and the PVA resin (B), and the component (A) is incapable of being dissolved in pure water. Therefore, Y/X may be considered to be substantially the rate of the PVA resin (B) extracted as a soluble element in the case of immersing the adhesive resin composition in hot water at 80°C for 1 hour with respect to the PVA resin (B) included in the adhesive resin composition.
The present inventor advanced examination of the interlayer adhesive strength of a laminate, and thus surprisingly found that adhesive strength to both of a PVA resin and a biodegradable resin layer is prominently improved in a case in which Y/X which is a specific parameter is in a range of 0.30 to 0.99.

The reason thereof is unclear. However, the reason that such an effect is exerted is presumed to be because a structure in which a sea-island structure site (the PVA resin (B) corresponds to an island) and the co-continuous structure site of the PVA resin (B) coexist in a balanced manner is formed when the rate of the PVA resin (B), decreasing in the case of the immersion in hot water at 80°C for 1 hour, is in a specific range. More specifically, the co-continuous structure site has a structure in which the PVA resin (B) is strung, and therefore allows adhesive strength to the PVA resin layer which is an adherend to be increased, while the PVA resin (B) is not strung in the sea-island structure site, and therefore the strength and toughness of the composition in itself are increased, and favorable adhesive strength to the biodegradable resin layer is easily exhibited. Therefore, a case in which these structures coexist in a balanced manner is presumed to result in improvement in adhesive strength to the PVA resin layer and the biodegradable resin layer.

In the co-continuous structure site having the structure in which the PVA resin (B) is strung, the PVA resin (B) is presumed to be easily dissolved in the case of the immersion in hot water in comparison with the sea-island structure site. In contrast, in the sea-island structure site that does not have the structure in which the PVA resin (B) is strung, the dissolution of the PVA resin (B) is presumed to tend to be inhibited in the immersion in hot water in comparison with the co-continuous structure site. Therefore, the rate of the co-continuous structure site is presumed to tend to increase with increasing the value of Y/X, while the rate of the sea-island structure site is presumed to tend to increase with decreasing the value of Y/X in Expression (1).

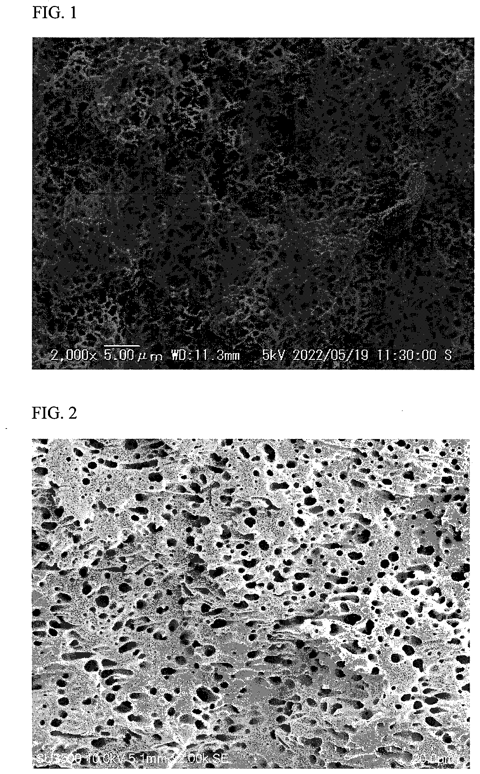

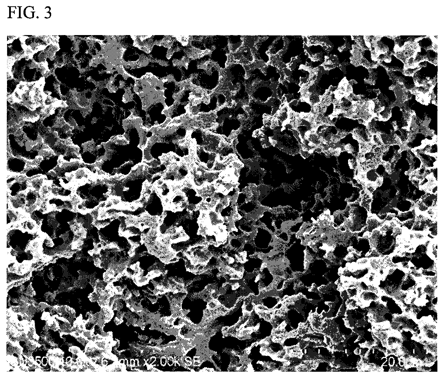

Fig. 1 is an image obtained by photographing, with a scanning electron microscope (abbreviated as "SEM"), a cross section of an adhesive resin composition film that has been subjected to hot water treatment in Example 2 of the present specification, Fig. 2 is an image obtained by photographing, with an SEM, an adhesive resin composition film that has been subjected to hot water treatment in Comparative Example 1, and Fig. 3 is an image obtained by photographing, with an SEM, an adhesive resin composition film that has been subjected to hot water treatment in Example 13.

Many gaps exist in the SEM images in Figs. 1, 2, and 3. However, it is considered that the PVA resin (B) removed by extraction in hot water originally existed in the gaps. As illustrated in the SEM images, a co-continuous structure site in which gaps are continuously strung and a sea-island structure site in which gaps form islands coexist in each of aspects in Fig. 1 and Fig. 3, in which Y/X is in the range described above, while in an aspect in Fig. 2 in which Y/X is less than 0.30, it is illustrated that a sea-island structure occupies the majority of the image. The present invention requires that Y/X is in a specific range. The structure of the adhesive resin composition is not limited as long as the effects of the present invention are exhibited.

Excellent adhesive strength can be exhibited because the value of Y/X in Expression (1) is adjusted to an appropriate value of 0.30 to 0.99 in the adhesive resin composition of the present invention, as described above. Herein, the adhesive strength can be evaluated by a peel test, and means peel strength between an adhesive resin composition (adhesive layer) and another layer such as a PVA resin layer or a biodegradable resin layer.

Bond strength to a PVA resin layer is prone to decrease in a case in which Y/X in Expression (1) is less than 0.30 and more than 0.99. In the present invention, Y/X in Expression (1) may be 0.3 or more, preferably 0.4 or more, more preferably 0.5 or more, sill more preferably 0.6 or more, even more preferably 0.66 or more, particularly preferably 0.7 or more, and particularly more preferably 0.8 or more, for example, 0.85 or more, or 0.90 or more. The upper limit of Y/X in Expression (1) is 0.99 or less, and preferably 0.98 or less. The adhesive strength to the PVA resin layer can be enhanced in a case in which Y/X is not less than the lower limit described above. In a case in which Y/X is not more than the upper limit described above, the strength and toughness of the adhesive resin composition in itself can be enhanced, and favorable adhesive strength to the biodegradable resin layer can also be exhibited. As a result, the bond strength to the PVA resin layer and the biodegradable resin layer can be improved in a case in which Y/X is not less than the lower limit described above and not more than the upper limit described above.

Y/X in Expression (1) may be controlled in the range described above by adjusting the values of X and Y. X can be adjusted based on the amount of the PVA resin (B) added in the case of producing the adhesive resin composition film. Y substantially indicates the amount of a decrease in the PVA resin (B) after the immersion in hot water for 1 hour, and can be adjusted in the range described above on the basis of the kinds and contents of the component (A) and the component (B), the saponification and polymerization degrees of the component (B), the condition of production of the adhesive resin composition, and the like. For example, Y/X in Expression (1) may be adjusted in the range described above by using the kinds and contents of the preferred component (A) and component (B) described in the present specification, the saponification and polymerization degrees of the preferred component (B), a preferred production condition, and the like as appropriate.

In one embodiment of the present invention, the diameter of a hole formed in immersion of a film including the adhesive resin composition and having a thickness of 300 $\mu$m in pure water at 80°C for 1 hour is preferably 10 $\mu$m or less, more preferably 5 $\mu$m or less, still more preferably 3 $\mu$m or less, and even more preferably 1 $\mu$m or less. Bond strength to a polyvinyl alcohol resin layer and a biodegradable resin layer is easily improved in a case in which the diameter of the hole is not more than the upper limit described above. The lower limit of the diameter of the hole is preferably 0.01 $\mu$m or more. The

film including the adhesive resin composition and having a thickness of 300 µm is the same as the film mentioned in the above description of Expression (1), and treatment of the immerse in pure water at 80°C for 1 hour is the same as the hot water treatment mentioned in the above description of Expression (1). The diameter of the hole can be measured using an SEM after the hot water treatment, and can be measured by, for example, a method described in Examples.

<Biodegradable Polyester Resin (A)>

The adhesive resin composition of the present invention includes the biodegradable polyester resin (A). Herein, a "biodegradable" material represents a material that has a property of being capable of chemical decomposition by action such as, for example, hydrolysis, enzymatic decomposition, or microbial decomposition, and preferably conforms to a standard for biodegradability specified in EN 13432, ASTM 6400, or ISO 14855. In other words, a material of which 90% decays into particles having an average size of less than 2 mm within 12 weeks, and of which at least 60% in the case of ASTM 6400 or at least 90% in the case of EN 13432 is decomposed into carbon dioxide and/or water after 6 months in the case of placing the material in a compost environment is considered to be biodegradable.

The biodegradable polyester resin is not particularly limited as long as the biodegradable polyester resin is a polyester resin having such biodegradability as described above. The biodegradable polyester resin may be a biodegradable resin derived from petroleum, or may be a biodegradable resin derived from an organism. Examples of the biodegradable polyester resin include aliphatic polyester resins, aromatic-aliphatic copolyester resins, and aromatic polyester resins. The biodegradable polyester resin preferably includes at least one selected from the group consisting of aliphatic polyester resins and aromatic-aliphatic copolyester resins, and more preferably includes an aromatic-aliphatic copolyester resin from the viewpoint of easily enhancing bond strength and thermoformability while having high biodegradability.

Examples of the aliphatic polyester resins include a polyhydroxyalkanoate (abbreviated as "PHA"), a polyalkylene monocarboxylate, and a polyalkylene dicarboxylate.

PHA is a polymer including a hydroxyalkanoic acid as a monomer unit. More specific examples thereof include a polyglycolic acid, a polylactic acid (which may be abbreviated as "PLA"), a poly(3-hydroxyalkanoate) (abbreviated as "P3HA"), and a poly(4-hydroxyalkanoate).

P3HA is a polymer mainly including a 3-hydroxyalkanoic acid as a monomer unit. Examples of the 3-hydroxyalkanoic acid include 3-hydroxybutyrate, 3-hydroxypropionate, 3-hydroxyvalerate, 3-hydroxyhexanoate, 3-hydroxyheptanoate, and 3-hydroxyoctanoate. P3HA may be a homopolymer, or may be a copolymer including two or more kinds of monomer units. In a case in which P3HA is a copolymer, the copolymer may be obtained by copolymerizing two or more kinds of 3-hydroxyalkanoic acids, or may be obtained by copolymerizing one or two or more kinds of 3-hydroxyalkanoic acids with a 4-hydroxyalkanoic acid such as 4-hydroxybutyrate.

Specific examples of P3HA include a poly(3-hydroxybutyrate) homopolymer (abbreviated as "PHB"), poly(3-hydroxybutyrate-co-3-hydroxyhexanoate) (abbreviated as "PHBH"), poly(3-hydroxybutyrate-co-3-hydroxyvalerate) (abbreviated as "PHBV"), and poly(3-hydroxybutyrate-co-4-hydroxybutyrate) (abbreviated as "3HB4HB").

Such polyalkylene monocarboxylates include the ring-opened polymer of lactone (cyclic ester). Specific examples thereof include a polycaprolactone (abbreviated as "PCL").

Such a polyalkylene dicarboxylate is a polycondensate of an aliphatic diol (or a derivative thereof) and an aliphatic dicarboxylic acid (or a derivative thereof). Examples thereof include polybutylene succinate (abbreviated as "PBS"), polyethylene succinate (abbreviated as "PES"), and poly(butylene succinate-co-butylene adipate).

Such an aliphatic polyester resin is preferably at least one selected from the group consisting of PHA, a polyalkylene monocarboxylate and a polyalkylene dicarboxylate, more preferably at least one selected from the group consisting of a polyalkylene monocarboxylate and a polyalkylene dicarboxylate from the viewpoint of easily enhancing bond strength, and more preferably PHA from the viewpoint of thermoformability.

Such an aromatic-aliphatic copolyester resin is a polyester resin including both of an aromatic site and an aliphatic site, and is a condensate of an aliphatic or aromatic diol (or a derivative thereof) and an aromatic or aliphatic dicarboxylic acid (or a derivative thereof). Examples thereof include polybutylene adipate terephthalate (abbreviated as "PBAT"), polybutylene succinate terephthalate (PBST), and polyethylene adipate terephthalate (PEAT). The aromatic-aliphatic copolyester resin is preferably PBAT from the viewpoint of easily enhancing bond strength and thermoformability while having high biodegradability.

Such biodegradable polyester resins may be used singly, or in combination of two or more kinds thereof.

The biodegradable polyester resin (A) may be produced by a common method, or a commercially available product may be used as the biodegradable polyester resin (A). Examples of the commercially available product of the biodegradable polyester resin (A) include: polycaprolactones (PCL) sold under a tradename of Tone (trademark) (for example, Tone P-300, P-700, P-767, and P-787, of which the weight-average molecular weights are about 10,000, 40,000, 43,000, and 80,000, respectively) by Union Carbide, or polycaprolactones (PCL) sold under tradenames of CAPA6800 and CAPAFB100 (having molecular weights of 80,000 and 100,000 daltons, respectively) by Perstorf; a polylactic acid (PLA) sold under a tradename of Natureworks (trademark) PLA by Cargill; polyhydroxybutyrate (PHB) sold under a tradename of Biocycle (trademark) or Biomer (trademark) by Biomer (Germany); polyethylene succinate (PES) and polybutylene succinate (PBS) (for example, Bionolle (trademark) 1001 (PBS) and Bionelle (trademark) 6000 (PES)) sold under a tradename of Bionolle (trademark) by Showa Highpolymer Co., Ltd.; polybutylene adipate (PBA) sold under a tradename of Skygreen (trademark) SG100 by SK Chemicals (Korea); polybutylene adipate terephthalate (PBAT) aliphatic/aromatic copolyesters, for example, Ecoflex (trademark) from BASF (Germany), or EnPOL (trademark) G8060 and EnPOL (trademark) 8000 from Ire Chemical Ltd (Seoul); and poly(hydroxybutyrate valerate) (PHBV) from Metabolix Inc. (U.S.A.).

The biodegradable polyester resin (A) may be a modified biodegradable polyester resin, or may be an unmodified biodegradable polyester resin. The modified biodegradable polyester resin is not particularly limited, and may be, for example, a modified biodegradable polyester resin obtained by graft-modifying a biodegradable polyester resin with an unsaturated carboxylic acid and/or a derivative thereof. The unsaturated carboxylic acid as a modifying agent is not particularly limited, and examples thereof include acrylic acid, methacrylic acid, maleic acid, fumaric acid, and itaconic acid. The derivative of the unsaturated carboxylic acid is not particularly limited, and examples thereof include acid anhydrides, esters, amides, imides, and metal salts.

Specific examples of the derivative of the unsaturated carboxylic acid include maleic anhydride, himic anhydride, itaconic anhydride, citraconic anhydride, methyl acrylate, methyl methacrylate, ethyl acrylate, ethyl methacrylate, glycidyl acrylate, monoethyl maleate ester, diethyl maleate ester, monomethyl itaconate ester, diethyl itaconate ester, acrylamide, methacrylamide, monoamide maleate, diamide maleate, maleic acid-N-monoethylamide, maleic acid-N,N-diethylamide, maleic acid-N,N-monobutylamide, maleic acid-N,N-dibutylamide, monoamide fumarate, diamide fumarate, fumaric acid-N-monobutylamide, fumaric acid-N,N-dibutylamide, maleimide, N-butylmaleimide, N-phenylmaleimide, sodium acrylate, sodium methacrylate, potassium acrylate, and potassium methacrylate.

Only one kind of such an unsaturated carboxylic acid and/or a derivative thereof may be used singly. Alternatively, two or more kinds of such unsaturated carboxylic acids and/or derivatives thereof may be used in an optional combination and ratio. Of these, maleic acid or an anhydride thereof is particularly preferred because of its low electron density and high reactivity.

The content of the modifying agent is preferably 0.01% by mass or more, more preferably 0.02% by mass or more, and still more preferably 0.03% by mass or more, and preferably 3.0% by mass or less, more preferably 1.0% by mass or less, and still more preferably 0.2% by mass or less with respect to the mass of the modified biodegradable polyester resin.

The adhesive resin composition of the present invention is the alloy of the biodegradable polyester resin (A) and the PVA resin (B), satisfying Expression (1), and can therefore exhibit excellent bond strength to the PVA resin layer and the biodegradable resin layer without modification of the biodegradable polyester resin. Therefore, the biodegradable polyester resin (A) is preferably an unmodified biodegradable polyester resin in a preferred embodiment of the present invention. In a case in which the biodegradable polyester resin is unmodified, the deterioration of biodegradability due to the modification can be prevented, and the complexity of production due to the modification can also be avoided.

In the preferred embodiment of the present invention, the biodegradable polyester resin (A) has a breaking elongation of preferably 50% or more, more preferably 100% or more, still more preferably 200% or more, even more preferably 400% or more, particularly preferably 600% or more, particularly more preferably 750% or more, particularly still more preferably 850% or more, or particularly even more preferably 1000% or more, measured according to ISO 527-1. In a case in which the breaking elongation is not less than the lower limit described above, toughness becomes high, and therefore, bond strength is easily improved. The upper limit of the breaking elongation is typically 5000% or less, preferably 3000% or less, and more preferably 2000% or less. In a case in which the breaking elongation is not more than the upper limit described above, the elastic modulus and maximum strength of the adhesive resin composition can be suppressed from decreasing, and therefore, a decrease in bond strength is easily suppressed. The breaking elongation can be measured according to ISO 527-1, and can be measured by, for example, a method described in Examples.

In the preferred embodiment of the present invention, the melting point of the biodegradable polyester resin (A) is preferably 70°C or more, more preferably 80°C or more, still more preferably 90°C or more, even more preferably 100°C or more, and particularly preferably 105°C or more. In a case in which the melting point of the biodegradable polyester resin (A) is not less than the lower limit described above, it is easy to further improve thermoformability, and therefore, generation of wrinkles or the like of an obtained laminate is easily suppressed or prevented to easily provide a favorable appearance. The upper limit of the melting point is preferably 300°C or less, more preferably 200°C or less, still more preferably 150°C or less, even more preferably 140°C or less, and particularly preferably 130°C or less. In a case in which the melting point is not more than the upper limit described above, thermoformability is easily enhanced, and therefore, the obtained laminate can be easily formed to have a predetermined shape. The melting point can be measured by a differential scanning calorimeter (DSC), and can be measured by, for example, a method described in Examples.

In one embodiment of the present invention, the melt mass flow rate (MFR) of the biodegradable polyester resin (A) is preferably 1.0 g/10 min or more, more preferably 3.0 g/10 min or more, still more preferably 5.0 g/10 min or more, even more preferably 7.0 g/10 min or more, and particularly preferably 10 g/10 min or more, and preferably 30 g/10 min or less, more preferably 25 g/10 min or less, and still more preferably 20 g/10 min or less. Bond strength and thermoformability are easily enhanced by allowing the MFR of the biodegradable polyester resin (A) to be in the range described above. The MFR can be measured under conditions of a temperature of 200°C and a load of 2.16 kg according to JIS K 7210: 2014.

In one embodiment of the present invention, the weight-average molecular weight (Mw) of the biodegradable polyester resin (A) is preferably 10,000 or more, more preferably 30,000 or more, and still more preferably 50,000 or more, and preferably 500,000 or less, more preferably 200,000 or less, and still more preferably 100,000 or less. Bond strength and thermoformability are easily enhanced by allowing the Mw of the biodegradable polyester resin (A) to be in the range described above.

In one embodiment of the present invention, the number average molecular weight (Mn) of the biodegradable polyester resin (A) is preferably 5,000 or more, more preferably 10,000 or more, and still more preferably 20,000 or more, and preferably 200,000 or less, more preferably 100,000 or less, and still more preferably 50,000 or less. Bond strength and thermoformability are easily enhanced by allowing the Mn of the biodegradable polyester resin (A) to be in the range described above.

The Mw and Mn of the biodegradable polyester resin (A) can be determined in terms of standard polystyrene by performing gel permeation chromatography (GPC) measurement, and can be determined by, for example, a method described in Examples.

The content of the biodegradable polyester resin (A) is preferably 42 parts by mass or more, more preferably 45 parts by mass or more, and still more preferably 48 parts by mass or more, preferably 90 parts by mass or less, more preferably 85 parts by mass or less, still more preferably 80 parts by mass or less, even more preferably 77 parts by mass or less, particularly preferably 75 parts by mass or less, and particularly more preferably 73 parts by mass or less, or 70 parts by mass or less, and particularly still more preferably 67 parts by mass or less, or 65 parts by mass or less, and extremely preferably 63 parts by mass or less with respect to 100 parts by mass in total of the component (A) and the component (B). In a case in which the content of the biodegradable polyester resin (A) is not less than the lower limit described above, biodegradability is easily improved, and bond strength to the biodegradable resin layer is easily enhanced. In a case in which the content of the biodegradable polyester resin (A) is not more than the upper limit described above, bond strength to the PVA resin layer is easily enhanced. The content of the biodegradable polyester resin (A) with respect to the mass of the adhesive resin composition can be selected from the range described above.

<Polyvinyl Alcohol Resin (B)>

The adhesive resin composition of the present invention includes the PVA resin (B).

The PVA resin (B) is a resin including a vinyl ester polymer or copolymer (such vinyl ester polymers and copolymers are generically referred to as "vinyl alcohol polymer"). The vinyl alcohol polymer is a polymer including a vinyl alcohol unit as a monomer unit. The vinyl alcohol polymer is obtained by saponification of a vinyl ester polymer obtained by polymerizing a vinyl ester monomer which is a raw monomer. The vinyl alcohol polymer after the saponification can include a vinyl ester unit as well as the vinyl alcohol unit.

The vinyl alcohol polymer may be a modified vinyl alcohol copolymer including another monomer unit other than a vinyl alcohol unit and a vinyl ester unit by saponifying a copolymer obtained by copolymerizing a vinyl ester monomer, which is a raw monomer for the vinyl alcohol polymer, with another monomer. The PVA resin (B) may include a plurality of kinds of vinyl alcohol polymers having different physical properties.

Examples of the vinyl ester monomer used as the raw monomer for the vinyl alcohol polymer include vinyl formate, vinyl acetate, vinyl propionate, vinyl valerianate, vinyl caprate, vinyl laurate, vinyl stearate, vinyl benzoate, vinyl pivalate, and vinyl versatate. Of these, vinyl acetate is preferred from the viewpoint of production, availability, a cost, and the like.

The vinyl alcohol polymer may be a modified vinyl alcohol copolymer including a vinyl alcohol unit, a vinyl ester unit, and another monomer unit other than the vinyl ester unit, as described above. The other monomer can be selected as appropriate depending on the kind of a PVA resin layer which is an adherend, and the like, and examples thereof include: $\alpha$-olefins such as ethylene, propylene, n-butene, and isobutylene; acrylic acids and salts thereof; acrylate esters; methacrylic acids and salts thereof; methacrylate esters; acrylamides; acrylamide derivatives such as N-methylacrylamide, N-ethylacrylamide, N,N-dimethylacrylamide, diacetone acrylamide, acrylamidopropane sulfonic acid and salts thereof, acrylamidopropyldimethylamine and salts or quaternary salts thereof, and N-methylolacrylamide and derivatives thereof; methacrylamide; methacrylamide derivatives such as N-methyl methacrylamide, N-ethyl methacrylamide, methacrylamidopropane sulfonic acid and salts thereof, methacrylamidopropyldimethylamine and salts or quaternary salts thereof, and N-methylolmethacrylamide and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride;

unsaturated dicarboxylic acids such as maleic acid, itaconic acid, and fumaric acid, and salts or esters thereof; vinylsilyl compounds such as vinyltrimethoxysilane; isopropenyl acetate; vinyl compounds such as dimethylallyl vinyl ketone, N-vinylpyrrolidone, vinylethylene carbonate, 2,2-dialkyl-4-vinyl-1,3-dioxolane, glycerin monoallyl ether, and 3,4-diacetoxy-1-butene; and the like. Of these, the other monomer is preferably an $\alpha$-olefin such as ethylene from the viewpoint of the easiness of industrial production. The contents (modification degrees) of such other monomer units vary according to the purposes of use, applications, and the like. In one embodiment, the content (modification degree) of such another monomer unit may be preferably 10% by mol or less, and more preferably 5% by mol or less, and preferably 0% by mol or more, and more preferably 0.1% by mol or more.

Some of the hydroxyl groups of the vinyl alcohol polymer may be crosslinked, or need not be crosslinked. Some of the hydroxyl groups of the vinyl alcohol polymer may react with aldehyde compounds such as acetaldehyde and butyraldehyde, and the like to form an acetal structure, or need not react with the compounds and need not form an acetal structure.

The PVA resin (B) preferably includes at least one selected from the group consisting of unmodified vinyl alcohol polymers and $\alpha$-olefin-vinyl alcohol copolymers, more preferably an unmodified vinyl alcohol polymer, as a vinyl alcohol polymer, from the viewpoint of easily enhancing bond strength and thermoformability, depending on the kind of the PVA resin layer which is an adherend.

The saponification degree of the PVA resin (B) included in the adhesive resin composition of the present invention is preferably 75% by mol or more, more preferably 77% by mol or more, still more preferably 79% by mol or more, and even more preferably 80% by mol or more, and may be, for example, 81% by mol or more, or 82% by mol or more. Moreover, the saponification degree of the PVA resin (B) is preferably 96% by mol or less, more preferably 94% by mol or less, still more preferably 92% by mol or less, even more preferably 90% by mol or less, particularly preferably 89% by mol or less, and particularly more preferably 88% by mol or less, and may be, for example, 85% by mol or less. In a case in which the saponification degree of the PVA resin (B) is not less than the lower limit described above, it is easy to form a hydrogen bond to the PVA resin layer which is an adherend, and therefore, gas barrier properties and bond strength to the PVA resin layer are easily enhanced. In a case in which the saponification degree of the PVA resin (B) is not more than the upper limit described above, appropriate flowability is easily exhibited in adhesion, and therefore, bond strength and thermoformability are easily enhanced. Herein, the saponification degree of the PVA resin (B) means the rate (% by mol) of the number of moles of vinyl alcohol units to the total number of moles of the vinyl alcohol units, and structural units (typically vinyl ester units) that can be converted into vinyl alcohol units by saponification, the vinyl alcohol units and the structural units being included in the vinyl alcohol polymer. The saponification degree of the PVA resin (B) can be measured according to JIS K 6726: 1994. With regard to the saponification degree of the PVA resin (B), in a case in which the PVA resin (B) includes only one kind of a vinyl alcohol polymer, the saponification degree of the vinyl alcohol polymer is the saponification degree of the PVA resin (B). In a case in which the PVA resin (B) includes two or more kinds of vinyl alcohol polymers, the saponification degree of the PVA resin (B) means an average saponification degree calculated from the saponification degrees and blending ratios of the corresponding vinyl alcohol polymers. In a case in which the PVA resin (B) includes two or more kinds of vinyl alcohol polymers, the vinyl alcohol polymers of which the saponification degrees are different from each other may be mixed at appropriate blending ratios to adjust the saponification degree of the PVA resin (B) in the range described above.

In one embodiment of the present invention, the viscosity average polymerization degree (which may be referred to as "polymerization degree") of the PVA resin (B) included in the adhesive resin composition of the present invention may be preferably 5000 or less, 4000 or less, 3000 or less, or 2000 or less, more preferably 1500 or less, still more preferably 1200 or less, even more preferably, it is 900 or less, particularly preferably 700 or less, particularly more preferably 600 or less, or particularly still more preferably 480 or less, 400 or less, or 350 or less. In a case in which the polymerization degree is not more than the upper limit described above, thermoformability and bond strength to the PVA resin layer are easily enhanced. This is presumed to be because, in adhesion, the PVA resin (B) which is a polar component easily transfers to an interface, and the PVA resin (B) easily forms a co-continuous structure site. The viscosity average polymerization degree of the PVA resin (B) is preferably 100 or more, more preferably 150 or more, still more preferably 200 or more, even more preferably 220 or more, particularly preferably 250 or more, and particularly more preferably 270 or more. In a case in which the polymerization degree is not less than the lower limit described above, the mechanical strength of the adhesive resin composition is easily enhanced, and bond strength to the biodegradable resin layer is easily enhanced. This is presumed to be because a sea-island structure is easily formed. The polymerization degree of the PVA resin (B) can be measured according to JIS K 6726: 1994. In a case in which the PVA resin (B) includes only one kind of a vinyl alcohol polymer, the polymerization degree of the vinyl alcohol polymer is the polymerization degree of the PVA resin (B). In a case in which the PVA resin (B) includes two or more kinds of vinyl alcohol polymers, the polymerization degree of the PVA resin (B) means an average polymerization degree calculated from the polymerization degrees and blending ratios of the corresponding vinyl alcohol polymers. In a case in which the PVA resin (B) includes two or more kinds of vinyl alcohol polymers, the vinyl alcohol polymers of which the polymerization degrees are different from each other may be mixed at appropriate blending ratios to adjust the polymerization degree of the PVA resin (B) in the range described above.

The content of the PVA resin (B) included in the adhesive resin composition of the present invention is preferably 10 parts by mass or more, more preferably 15 parts by mass or more, still more preferably 20 parts by mass or more, even more preferably 23 parts by mass or more, particularly preferably 25 parts by mass or more, particularly more preferably 27 parts by mass or more, or 30 parts by mass or more, extremely preferably 33 parts by mass or more, or 35 parts by mass or more, and extremely more preferably 37 parts by mass or more, and preferably 58 parts by mass or less, more preferably 55 parts by mass or less, and still more preferably 52 parts by mass or less with respect to 100 parts by mass in total of the component (A) and the component (B). In a case in which the content of the PVA resin (B) is not less than the lower limit described above, adhesive strength to the PVA resin layer is enhanced, and bond strength is easily improved. In a case in which the content of the PVA resin (B) is not more than the upper limit described above, bond strength to the biodegradable resin layer is easily increased. The content of the PVA resin (B) with respect to the mass of the adhesive resin composition can also be selected from the range described above.

In one embodiment of the present invention, the easiness of formation of a co-continuous structure site is presumed to be increased, and the easiness of increasing the value of Y/X tends to be increased, with increasing the content of the component (B). In contrast, the easiness of formation of a sea-island structure site is presumed to be increased, and the easiness of decreasing the value of Y/X tends to be increased, with decreasing the content of the component (B). In a case in which the saponification degree of the component (B) is too high or too low, formation of a co-continuous structure site is presumed to be inhibited. The value of Y/X tends to be easily increased by allowing the saponification degree to be appropriate. Furthermore, the easiness of formation of a co-continuous structure site is presumed to be increased, and the easiness of increasing the value of Y/X tends to be increased, with decreasing the polymerization degree of the component (B). In contrast, the easiness of formation of a sea-island structure site is presumed to be increased, and the easiness of decreasing the value of Y/X tends to be increased, with increasing the polymerization degree of the component (B).

<Method of Producing Polyvinyl Alcohol Resin (B)>

The PVA resin (B) includes a vinyl alcohol polymer as described above. The vinyl alcohol polymer can be obtained by, for example, polymerizing vinyl ester monomers, or a vinyl ester monomer and another monomer to obtain a vinyl ester polymer or copolymer, and further saponifying the vinyl ester polymer or copolymer. Examples of a method of polymerizing vinyl ester monomers and the like include known methods such as a bulk polymerization method, a solution polymerization method, a suspension polymerization method, and an emulsion polymerization method. Of these, a bulk polymerization method or a solution polymerization method in which polymerization is performed in the absence of a solvent or in a solvent such as an alcohol is preferably used. Examples of the alcohol used as the solvent in the solution polymerization include lower alcohols such as methanol, ethanol, and propanol. Examples of an initiator used for copolymerization include a known initiator such as an azo initiator or a peroxide-based initiator, such as 2,2'-azobisisobutyronitrile, 2,2'-azobis(2,4-dimethyl-valeronitrile), benzoyl peroxide, or n-propylperoxydicarbonate. A polymerization temperature is not particularly limited, and is preferably in a range of 0°C to 150°C. For example, in a case in which the vinyl alcohol polymer is an ethylene-vinyl alcohol copolymer or the like, a vinyl ester monomer and a monomer such as ethylene are preferably copolymerized by such a method as described above.

The vinyl ester polymer obtained in the polymerization step can be saponified by an alcoholysis or hydrolysis reaction in the presence of a catalyst in an organic solvent. Examples of the catalyst used in the saponification step include: basic catalysts such as sodium hydroxide, potassium hydroxide, and sodium methoxide; and acid catalysts such as sulfuric acid, hydrochloric acid, and p-toluenesulfonate. The organic solvent used in the saponification step is not particularly limited, and examples thereof include: alcohols such as methanol and ethanol; esters such as methyl acetate and ethyl acetate; ketones such as acetone and methyl ethyl ketone; and aromatic hydrocarbons such as benzene and toluene. These may be used singly, or in combination of two or more kinds thereof. Especially, it is easy and preferable to perform a saponification reaction in the presence of sodium hydroxide as a basic catalyst by using, as a solvent, methanol, or a mixed solution of methanol and methyl acetate. As the amount of the saponification catalyst used, a molar ratio of 0.001 to 0.5 with respect to the vinyl ester monomer unit in the vinyl ester polymer is preferred. The molar ratio is more preferably 0.002 or more, and preferably 0.4 or less, and more preferably 0.3 or less.

A preferred embodiment of the saponification step is as follows. First, the saponification catalyst such as sodium hydroxide is added to the vinyl ester polymer solution obtained in the polymerization step, and the saponification catalyst and the vinyl ester polymer solution are mixed. A solvent in such a case is preferably methanol. The mixture is a homogeneous liquid at the beginning of the mixing. However, solubility in the solvent is decreased, and the polymer is precipitated in the solution when the saponification reaction proceeds, and a vinyl ester unit in the polymer is saponified and converted into a vinyl alcohol unit. In such a case, the solution includes methyl acetate generated in alcoholysis by methanol. With proceeding of the saponification reaction, the amount of the precipitated polymer is gradually increased, the solution is allowed to be in slurry form, and flowability is then lost from the solution. Accordingly, sufficient mixing before the loss of the flowability is preferred for allowing the saponification reaction to uniformly proceed.

A method of mixing the vinyl ester polymer solution and the saponification catalyst is not particularly limited, various methods such as a static mixer, a kneader, and a stirring blade can be adopted, and use of a static mixer is preferred in view of enabling continuous and homogeneous mixture. In such a case, it is preferable to add the saponification catalyst to the vinyl ester polymer solution that has been subjected to the polymerization step, in a pipe connected to a polymerization tank, and to then pass the resultant through the static mixer to mix the resultant to obtain paste. The temperature of the reaction liquid in the static mixer is typically 20 to 80°C.

A method of the saponification reaction of the vinyl ester polymer in the paste passed through the static mixer is not particularly limited. As the method, a method in which the paste is placed on a moved belt, and the saponification reaction is allowed to proceed while moving the belt in a tank kept at a constant temperature is preferred. The flowability of the paste on the belt is lost, the paste becomes in a solid state, and the saponification reaction further proceeds in the solid state. By the method, the saponification reaction can be allowed to continuously proceed in the solid state, and a solid block including a vinyl alcohol polymer and a solvent is obtained. A saponification temperature is preferably 20 to 60°C, preferably 25°C or more, and more preferably 30°C or more, and preferably 55°C or less, and more preferably 50°C or less. In a case in which the saponification temperature is not less than the lower limit described above, a decrease in reaction rate is easily suppressed. In a case in which the saponification temperature is not more than the upper limit described above, a decrease in the content of the solvent in the obtained solid block is suppressed, and the deterioration of the solubility of the obtained vinyl alcohol polymer is easily suppressed. Saponification time is preferably 5 minutes to 2 hours. The saponification time is more preferably 8 minutes or more, and still more preferably 10 minutes or more, and more preferably 1.5 hours or less, and still more preferably 1 hour or less.

If necessary, a washing step may be added to wash the vinyl alcohol polymer for the purpose of removing impurities such as sodium acetate. Examples of a washing liquid include methanol, acetone, methyl acetate, ethyl acetate, hexane, and water. Of these, one or a liquid mixture of methanol, methyl acetate, and water is more preferred. Typically, the amount of the washing liquid is preferably 30 to 10000 parts by mass, and more preferably 50 to 3000 parts by mass with respect to 100 parts by mass of the vinyl alcohol polymer. A washing temperature is preferably 5 to 80°C, and more preferably 20 to 70°C. Washing time is preferably 20 minutes to 10 hours, and more preferably 1 hour to 6 hours. A known method such as a batch method or a countercurrent washing method can be applied as a washing method. A commercially available product can also be used as the vinyl alcohol polymer.

<Adhesive Resin Composition>

The adhesive resin composition of the present invention includes the biodegradable polyester resin (A) and the polyvinyl alcohol resin (B), satisfies Expression (1), and therefore has excellent bond strength to both of the PVA resin layer and the biodegradable resin layer. Therefore, the adhesive resin composition is useful as an adhesive layer for the PVA resin layer and the biodegradable polyester resin layer. The adhesive resin composition of the present invention is also excellent in thermoformability, and enables an obtained laminate to be easily formed in a predetermined shape. Furthermore, the adhesive resin composition is also excellent in biodegradability. Accordingly, the adhesive resin composition of the present invention can be preferably used in a packaging material for food or the like, or an agricultural film.

The bond strength of the adhesive resin composition of the present invention to the PVA resin is preferably 4 N/25 mm or more, more preferably 5 N/25 mm or more, still more preferably 7 N/25 mm or more, even more preferably 10 N/25 mm or more, particularly preferably 15 N/25 mm or more, and particularly more preferably 20 N/25 mm or more, and may be, for example, 25 N/25 mm or more, 27 N/25 mm or more, or 30 N/25 mm or more. In a case in which the bond strength is not less than the lower limit described above, the strength of the obtained laminate is easily improved. The bond strength to the PVA resin is typically 100 N/25 mm or less. The bond strength to the PVA resin means peel strength between the adhesive layer and the PVA resin layer in a multilayer sheet including the PVA resin layer and the adhesive layer including the adhesive resin composition. The peel strength can be measured according to JIS K 6854-1: 1999 under conditions of a peel angle of 90°, a tension speed of 50 mm/min, and an environmental temperature of 23°C by using a peel test machine. The bond strength to the PVA resin can be determined by, for example, a method described in Examples.

The bond strength of the adhesive resin composition of the present invention to the biodegradable resin (preferably, PLA) is preferably 9 N/25 mm or more, more preferably 15 N/25 mm or more, still more preferably 20 N/25 mm or more, even more preferably 30 N/25 mm or more, particularly preferably 40 N/25 mm or more, particularly more preferably 50 N/25 mm or more, and particularly still more preferably 55 N/25 mm or more. In a case in which the bond strength is not less than the lower limit described above, the strength of the obtained laminate can be improved. The bond strength to the biodegradable resin is typically 150 N/25 mm or less. The bond strength to the biodegradable resin means peel strength between the adhesive layer and the biodegradable resin layer in a multilayer sheet including the biodegradable resin layer and the adhesive layer including the adhesive resin composition. The peel strength can be measured according to JIS K 6854-1: 1999 under conditions of a peel angle of 90°, a tension speed of 50 mm/min, and an environmental temperature of 23°C by using a peel test machine. The bond strength to the biodegradable resin can be determined by, for example, a method described in Examples.

The adhesive resin composition of the present invention may include an additive other than component (A) and the component (B) as long as the objectives and effects of the present invention are not impaired. Examples of the additive include fillers, processing stabilizers, weathering stabilizers, coloring agents, ultraviolet absorbents, heat stabilizers, light stabilizers, antioxidants, antistatic agents, flame retardants, plasticizers, lubricants, flavoring agents, blowing agents, deodorants, extenders, release agents, mold release agents, reinforcing agents, antifungal agents, antiseptic agents, crystallization rate retarders, and the resins other than the biodegradable polyester resin (A) and the PVA resin (B). These additives may be used singly, or in combination of two or more kinds thereof. The content of such an additive is not particularly limited, and may be, for example, 20% by mass or less, preferably 10% by mass or less, and more preferably 5% by mass or less, and preferably 0% by mass or more, and more preferably 0.1% by mass or more with respect to the mass of the adhesive resin composition. The adhesive resin composition of the present invention may include an additive insoluble in hot water, among the additives described above. The additive insoluble in hot water refers to an additive of which the mass is not decreased in the case of performing the hot water treatment described above. In one embodiment of the present invention, the adhesive resin composition of the present invention may consist of the component (A), the component (B), and optionally an additive insoluble in hot water.

Such a filler can be added from the viewpoint of preferably easily enhancing hardness and rigidity, and easily preventing blocking. Examples of the filler include inorganic fillers such as isinglass, kaolin, kaolinite, clay, talc, acid white clay, silica, alumina, diatom earth, bentonite, montmorillonite, kibushi clay, potter's clay, agalmatolite, alunite, china clay, feldspar, pearlite, calcium carbonate, magnesium hydroxide, carbon black, vermiculite, titanium oxide, mica, zirconium oxide, boron nitride, aluminum nitride, shirasu, glass, and glass fibers, and organic fillers such as urea-formalin resins and melamine-formalin resins. The fillers can be used singly, or in combination of two or more kinds thereof.

Examples of the other resins include: polyamide resins such as polyphenylene ether resin, polycarbonate resin, nylon 66, and nylon 11; polyester resins such as polyethylene terephthalate and polybutylene terephthalate; styrenic resins such as polystyrene; and (meth)acrylate resins such as polymethyl methacrylate resin. The other resins can be used singly, or in combination of two or more kinds thereof.

The form of the adhesive resin composition of the present invention is not particularly limited, and may be a pellet, a sheet, or a film. In other words, the form may be the pellet, the sheet, or the film, including or consisting of the adhesive resin composition. The thickness of the sheet or the film can be selected depending on an application as appropriate, and is preferably 5 to 1000 $\mu$m, and more preferably 10 to 500 $\mu$m. The thickness of the film or the sheet can be measured by a thickness gauge, and can be measured by, for example, a method described in Examples. The adhesive resin composition of the present invention may also include a solvent, or may be in the form of a solution or a dispersion liquid. As the solvent, a known solvent in which a component in the composition can be dissolved or dispersed can be used.

A method of producing the adhesive resin composition of the present invention is not particularly limited, and may be, for example, a method of mixing a biodegradable polyester resin (A), a PVA resin (B), optionally an additive, and the like. For the mixing, a common mixer, or preferably a melt-kneading machine can be preferably used. In a preferred embodiment of the present invention, the adhesive resin composition can be obtained by melt-kneading using an extruder.

As the extruder, a twin screw extruder can be preferably used. Either corotation or reverse rotation may be performed in the twin screw extruder. The rotation number (rotation speed) of the screw is preferably 20 rpm or more, more preferably 70 rpm, and still more preferably 150 rpm or more, and typically 1000 rpm or less. A cylinder temperature is preferably 40°C or more, more preferably 80°C or more, and still more preferably 100°C or more, and preferably 300°C or less, and more preferably 200°C or less. Each component can be directly introduced into the extruder. Each of the components premixed using a mixer or the like may be introduced into the extruder.

A molten mixture moved in the extruder while being melt-kneaded is extruded from a die. The temperature of the die may be preferably 100 to 200°C, and more preferably 100 to 150°C.

Specific mechanical energy (SME) (unit: kJ/kg) at the time of the melt-kneading is not particularly limited, and is preferably 400 kJ/kg or more, and more preferably 500 kJ/kg or more, and preferably 900 kJ/kg or less, and more preferably 800 kJ/kg or less. In a case in which the specific mechanical energy is in the range described above, X/Y is easily adjusted in the range described above, and the bond strength of the adhesive resin composition is easily enhanced. The specific mechanical energy ($\psi$) is determined by the following Expression:

$$\psi = N \, (RUN)/N \, (MAX) \times \Phi/\varphi \, (MAX) \times Kw/Q \qquad (4)$$

[in Expression 1, N (RUN) represents the rotation number (unit: rpm) of the screw, N (MAX) represents the maximum rotation number (unit: rpm) of the screw, $\Phi$ represents a motor torque (unit: N·m) in a test, $\varphi$ (MAX) represents a maximum motor torque (unit: N·m), Kw represents a motor power (unit: kJ/h), and Q represents a discharge amount (unit: kg/h)].

The extruded mixture (molten material) can be extruded in a sheet, film, or strand form. In this case, the mixture (molten material) is cooled and dried.

In the case of extruding the mixture in the strand form, the mixture is extruded from a strand nozzle with a plurality of holes, and cut by a rotary cutter, whereby the strands can be allowed to be in the form of pellets. In order to prevent agglutination of the pellets, vibrations can be regularly or steadily applied to the pellets, and water in the pellets can be removed by hot blast, dehumidified air, or an infrared heater.

In the case of extruding the mixture in the sheet or film form, the mixture is extruded from a die for forming a film, and the mixture can be then cooled and dried while winding the mixture by a collection roller. To prevent the mixture from adhering to the roller, cooling is preferably performed between the die and the roller. A film may also be produced in a sheet or film form with a solution or dispersion liquid of the adhesive resin composition of the present invention by a common film production method (for example, cast film production or the like).

[Adhesive Resin Composition Including Co-Continuous Structure]

The present invention also encompasses an adhesive resin composition including a biodegradable polyester resin (A) and a polyvinyl alcohol resin (B), wherein the adhesive resin composition includes a co-continuous structure formed of at least (or consisting of at least) a phase consisting of the biodegradable polyester resin (A) and a phase consisting of the PVA resin (B). The adhesive resin composition of the present invention includes the specific co-continuous structure, and is therefore excellent in bond strength to both of a PVA resin layer and a biodegradable resin layer. Therefore, the adhesive resin composition is useful as an adhesive layer for the PVA resin layer and the biodegradable polyester resin layer. The adhesive resin composition of the present invention is also excellent in thermoformability, and enables an obtained laminate to be easily formed in a predetermined shape. Furthermore, the adhesive resin composition is also excellent in biodegradability. Accordingly, the adhesive resin composition of the present invention can be preferably used in a packaging material for food or the like, or an agricultural film.

Herein, the co-continuous structure is a network structure (or a three-dimensional continuous structure) in which two components or two or more components are mixed with each other while each forming a consecutive phase, and can be distinguished from a sea-island structure, a cylindrical structure, and a lamellar structure. The whole network structure (or the three-dimensional continuous structure) is not necessarily connected. The network structure (or the three-dimensional continuous structure) may be partly broken off.

In the present invention, the co-continuous structure is formed of at least two phases, a first phase consists of biodegradable polyester resin (A), and a second phase consists of the PVA resin (B). In a case in which the adhesive resin composition includes an additive such as, for example, the other resins described above, the co-continuous structure may include another phase, but the co-continuous structure is preferably formed only of the phase consisting of the biodegradable polyester resin (A) and the phase consisting of the PVA resin (B) from the viewpoint of enhancing the bond strength and thermoformability of the adhesive resin composition.

In one embodiment of the present invention, the adhesive resin composition of the present invention preferably includes both of the co-continuous structure and the sea-island structure, and more preferably includes mostly the co-continuous structure and locally the sea-island structure. In the sea-island structure, a sea portion is the biodegradable polyester resin (A), and an island portion is the PVA resin (B). The inclusion of such structures enables excellent bond strength to both of the PVA resin layer and the biodegradable resin layer to be exhibited. This is considered to be because in a co-continuous structure site, the PVA resin (B) is strung, and therefore, adhesive strength to the PVA resin layer which is an adherend is enhanced, while in a sea-island structure site, the PVA resin (B) is not strung, and therefore, the strength and toughness of the composition in itself is enhanced, and favorable adhesive strength to the biodegradable resin layer is easily exhibited. The co-continuous structure can be measured by performing vapor deposition of platinum on a cross section of a sample (adhesive resin composition film) subjected to the hot water treatment described above, and using an SEM, and can be measured by, for example, a method described in Examples.

In an obtained SEM image, an area in which the PVA resin (B) has existed becomes a gap because the PVA resin (B) is eluted due to the hot water treatment, as described above. For example, the phase consisting of the biodegradable polyester resin (A) other than the gap and the phase consisting of the PVA resins (B) corresponding to the gap can be confirmed to form the co-continuous structure in Fig. 13. Moreover, the sea-island structure in which the phase consisting of the biodegradable polyester resin (A) other than the gap is the sea portion, and the phase consisting of the PVA resin (B) corresponding to the gap is the island portion can be confirmed to be partly included.

Examples of a method of preparing a co-continuous structure include methods similar to a method of adjusting Y/X in Expression (1). In other words, the adhesive resin composition including the co-continuous structure can be obtained by adjusting the kinds and contents of the component (A) and the component (B), the saponification and polymerization degrees of the component (B), the condition of production of the adhesive resin composition, and the like, for example, by using, as appropriate, the preferred kinds and contents of component (A) and the component (B), the preferred saponification and polymerization degrees of the component (B), the preferred condition of production, and the like, as described in the present specification. In one embodiment of the present invention, the more the content of the component (B) is, the more appropriate the saponification degree of the component (B) is, or the lower the polymerization degree is, the more easily the co-continuous structure tends to be formed.

[Laminate]

The present invention encompasses a laminate including an adhesive layer including the adhesive resin composition of the present invention. The laminate of the present invention may include one or two or more adhesive layers of the present invention. In a case in which the laminate the two or more adhesive layers, the corresponding compositions of the adhesive layers may be the same or different. The form of such an adhesive layer is not particularly limited, and may be, for example, a film or sheet form. The laminate may include a layer other than the adhesive layer of the present invention. Examples of the other layer include resin layers, papers, and other adhesive layers. The resin layer is a resin layer of which the composition is different from that of the adhesive layer. The adhesive layer preferably has "biodegradability" defined above.

The resin included in the resin layer is not particularly limited, and examples thereof include: polyester resins such as polyethylene terephthalate (PET); polyolefin resins such as polypropylene (PP) [preferably, biaxial orientation polypropylene (BOPP)] and polyethylene (PE) [preferably, low-density polyethylene (LDPE), high-density polyethylene (HDPE), and linear low-density polyethylene (LLDPE)]; ethylene-vinyl acetate copolymers; polyvinyl alcohol resins such as polyvinyl alcohol and ethylene·α-olefin copolymer; biodegradable resins such as biodegradable polyester resins; and resins obtained by modifying these resins with a modifying agent such as maleic anhydride. Such resin layers may be used singly, or in combination of two or more kinds thereof.

The adhesive layer in the laminate of the present invention includes the adhesive resin composition satisfying Expression (1), and therefore enables excellent bond strength to both of the biodegradable resin layer and the polyvinyl alcohol resin layer to be exhibited. Therefore, the laminate of the present invention preferably includes a biodegradable resin layer and/or a polyvinyl alcohol resin layer as such a resin layer, and more preferably includes the biodegradable resin layer and the polyvinyl alcohol resin layer as such resin layers. The resin layer in the laminate of the present invention preferably consists only of the biodegradable resin layer and the polyvinyl alcohol resin layer from the viewpoint of exhibiting excellent biodegradability. Furthermore, the laminate of the present invention includes the adhesive layer, whereby thermoformability, biodegradability, and gas barrier properties can be improved.

The biodegradable resin layer is a resin layer having biodegradability, and the biodegradability is as defined above. The biodegradable resin layer is preferably a layer including a biodegradable resin as a main component. Examples of the biodegradable resin include casein, modified starch, and cellulose acetate, as well as the biodegradable polyester resins described in the section of <Biodegradable Polyester Resin (A)> described above. Of these, the biodegradable resin is preferably the biodegradable polyester resin from the viewpoint of easily enhancing biodegradability and bond strength to the adhesive layer, more preferably at least one selected from the group consisting of PLA, PHB, PHBV, 3HB4HB, PHBH, PBAT, PBS, and PCL further from the viewpoint of general-purpose properties, biodegradability, and mechanical properties, and still more preferably PLA and/or PBAT further from the viewpoint of strength, heat resistance, and water resistance.

The PVA resin layer is not particularly limited as long as the PVA resin layer includes a PVA resin as a main component. Examples of the PVA resin include the polyvinyl alcohol resins described in the section of <Polyvinyl Alcohol Resin (B)> described above. In one embodiment of the present invention, the PVA resin layer can include, for example, a plasticizer of a polyol (for example, trehalose or the like) as well as the PVA resin.

Herein, "main component" means a component included in an amount of 40% by mass or more, preferably 50% by mass or more, with respect to the mass of a layer. The amount may be for example, 55% by mass or more, 70% by mass or more, or 90% by mass or more. The PVA resin layer preferably has the biodegradability defined above.

Such a paper is not particularly limited. Examples of the papers include kraft paper, kraft paper of which both surfaces are not subjected to surface finishing, premium grade paper, poster paper, glassine paper, parchment paper, synthetic paper, white paperboard, manila board, milk carton paper, cup base paper, ivory paper, and silver paper.

Examples of the laminate of the present invention include: a laminate including a biodegradable resin layer and an adhesive layer in the order mentioned; a laminate including a PVA resin layer and an adhesive layer in the order mentioned; and a laminate including a biodegradable resin layer, an adhesive layer, and a PVA resin layer in the order mentioned. Of these, the laminate of the present invention is preferably a laminate (which may be referred to as "laminate A") including a biodegradable resin layer, an adhesive layer, and a PVA resin layer in the order mentioned. These laminates may include another layer other than a biodegradable resin layer and a PVA resin layer between the layers or on the outside of each of the layers. However, it is preferable that the laminates do not include the other layer between the layers, that is, the layers are adjacent to each other. For example, in the laminate A, the biodegradable resin layer, the adhesive layer, and the PVA resin are preferably placed so that the biodegradable resin layer, the adhesive layer, and the PVA resin are adjacent to (that is, come into contact with) each other in the order mentioned. The laminate A is excellent in bond strengths between the biodegradable resin layer and the adhesive layer, and between the adhesive layer and the PVA resin layer, and in biodegradability.

The thickness of the adhesive layer in the laminate of the present invention can be selected as appropriate depending on the kind of the laminate, and is not particularly limited. However, the thickness is preferably 1 $\mu$m or more, more preferably 3 $\mu$m or more, still more preferably 5 $\mu$m or more, even more preferably 10 $\mu$m or more, and particularly preferably 15 $\mu$m or more, and preferably 1000 $\mu$m or less, more preferably 500 $\mu$m or less, still more preferably 200 $\mu$m or less, even more preferably 100 $\mu$m or less, and particularly preferably 50 $\mu$m or less. In a case in which the thickness of the adhesive layer is in the range described above, bond strength, thermoformability, biodegradability, and gas barrier properties are easily enhanced. In a case in which two or more adhesive layers are included in the laminate, the thickness of the adhesive layer described above means the thickness of one of the adhesive layers.

The thickness of the layer (for example, the biodegradable resin layer or the PVA resin layer) other than the adhesive layer in the laminate of the present invention can be selected as appropriate depending on the kind of the laminate, and is not particularly limited. However, the thickness is preferably 15 to 1000 $\mu$m, more preferably 20 to 500 $\mu$m, and still more preferably 30 to 400 $\mu$m. In a case in which the thickness of the other layer is in the range described above, bond strength, thermoformability, biodegradability, and gas barrier properties are easily enhanced. In a case in which other two or more layers are included in the laminate, the thickness of the other layer described above means the thickness of one of the layers.

The thickness of the laminate of the present invention is not particularly limited, and is preferably 50 $\mu$m or more, more preferably 70 $\mu$m or more, still more preferably 100 $\mu$m or more, particularly preferably 200 $\mu$m or more, and particularly more preferably 300 $\mu$m or more, and preferably 5000 $\mu$m or less, more preferably 3000 $\mu$m or less, and still more preferably 1000 $\mu$m or less. In a case in which the thickness of the laminate is in the range described above, the strength, thermoformability, biodegradability, and gas barrier properties of the laminate are easily enhanced.

In one embodiment of the present invention, the thickness of the adhesive layer in the laminate A of the present invention is the same as the thickness of the adhesive layer described above. The thickness of the biodegradable resin layer in the laminate A is not particularly limited, and is preferably 30 $\mu$m or more, more preferably 50 $\mu$m or more, still more preferably 100 $\mu$m or more, and even more preferably 200 $\mu$m or more, and preferably 1000 $\mu$m or less, and more preferably 500 $\mu$m or less. Furthermore, the thickness of the PVA resin layer in the laminate A is not particularly limited, and is preferably 15 $\mu$m or more, more preferably 20 $\mu$m or more, and still more preferably 25 $\mu$m or more, and preferably 1000 $\mu$m or less, more preferably 500 $\mu$m or less, still more preferably 200 $\mu$m or less, even more preferably 100 $\mu$m or less, and particularly preferably 50 $\mu$m or less. In a case in which the thickness of each layer is in the range described above, bond strength, thermoformability, biodegradability, and gas barrier properties are easily enhanced. In a case in which the same two or more layers are present in the laminate A, the thickness of each of the layers (biodegradable resin layer, adhesive layer, and PVA resin layer) in the laminate A described above means the thickness of one of the layers. The thickness of each of the layers described above, and the thickness of the laminate can be measured using a thickness gauge, and can be measured by, for example, a method described in Examples.

Examples of the specific layer configuration of the laminate A of the present invention may include the following: Biodegradable resin layer/adhesive layer/PVA resin layer; biodegradable resin layer/adhesive layer/PVA resin layer/-adhesive layer/biodegradable resin layer; biodegradable resin layer/regrind layer/adhesive layer/PVA resin layer/adhesive layer/regrind layer/biodegradable resin layer; and biodegradable resin layer/adhesive layer/PVA resin layer/adhesive layer/paper.

In one embodiment of the present invention, in the laminate of the present invention, at least one layer selected from the group consisting of the biodegradable resin layer, the adhesive layer, and the PVA resin layer is preferably biodegradable in accordance with the standard of ISO 14855, and more preferably at least two layers thereof, still more preferably all the layers thereof, are biodegradable in accordance with the standard of ISO 14855.

The laminate of the present invention can be produced by laminating an adhesive layer and another layer such as a resin layer by a common method such as a coextrusion forming method (a coextrusion lamination method, a coextrusion sheet forming method, a coextrusion inflation forming method, a coextrusion blow forming method, or the like), a co-injection forming method, an extrusion lamination method, or a dry lamination method. The method may be, for example, a method in which another layer and an adhesive layer are coextruded or laminated, or may be a method in which the film of an adhesive resin composition is formed on another layer. In the lamination, the adhesive resin composition may be applied to a surface of the other layer, or may be extrusion-coated on a surface of the other layer.

A method of producing the laminate A which is a preferred embodiment of the present invention is not particularly limited, and is preferably a method in which an adhesive resin composition in a pellet form, forming an adhesive layer, a biodegradable resin (or biodegradable resin composition) in a pellet form, forming a biodegradable resin layer, and a PVA resin (or PVA resin composition) in a pellet form, forming a PVA resin layer, are coextruded by a co-extruder. More specifically, each resin (or each resin composition) can be introduced into the hopper of each extruder, melt-knead, and coextruded by a feed block die. The cylinder temperature of each extruder may be selected as appropriate depending on the melt temperature of the resin (or resin composition). Without limitation, for example, the cylinder temperature of an extruder for an adhesive layer may be, for example, 120 to 300°C, and preferably 150 to 250°C, the cylinder temperature of an extruder for a biodegradable resin layer may be, for example, 150 to 300°C, and preferably 180 to 250°C, and the cylinder temperature of an extruder for a PVA resin layer may be, for example, 150 to 300°C, and preferably 190 to 260°C.

In one embodiment of the present invention, a crosslinking agent may be added to the adhesive resin composition of the present invention when the laminate of the present invention is obtained. Examples of the crosslinking agent include epoxy compounds, isocyanate compounds, aldehyde compounds, silica compounds, aluminum compounds, zirconium compounds, and boron compounds. Of these, silica compounds such as colloidal silica and alkyl silicate are preferred. The amount of the added crosslinking agent may be 5 to 60 parts by mass, preferably 10 to 40 parts by mass, and more preferably 15 to 30 parts by mass with respect to 100 parts by mass of the PVA resin. In one embodiment of the present invention, the laminate of the present invention may be subjected to stretching treatment for the purpose of improving gas barrier properties and mechanical properties.

The laminate of the present invention is also excellent in thermoformability, and can be easily formed in a predetermined shape. In a preferred embodiment, even thermoforming does not result in occurrence of wrinkles and the like, and therefore, appearance characteristics are excellent. A forming method is preferably melt-forming. A melt-forming method is not particularly limited, and examples thereof include an extrusion forming method, an injection forming method, a film forming method by extrusion from a T-die, an inflation film forming method, a compression forming method, a transfer forming method, a reinforced plastic forming method, a hollow forming method, a press forming method, a blow forming method, a calender forming method, a foaming method, a vacuum forming method, and a compressed-air forming method. Optionally, another thermoplastic resin can also be laminated by a method such as a coextrusion forming method or a laminate forming method. Formed bodies having optional shapes, such as a film, a sheet, a tube, a bottle, a capsule, a nonwoven fabric, and a fiber, are obtained by these methods. In one embodiment of the present invention, the laminate can be heated and then formed in a desired shape by a vacuum forming machine in the case of formation by a vacuum forming method. A forming temperature is not limited, and can be selected as appropriate depending on the kind of the laminate. The forming temperature is preferably 100°C or more, more preferably 130°C or more, and still more preferably 150°C or more, and preferably 300°C or less, and more preferably 200°C or less. Such a forming temperature allows a formed body excellent in thermoformability to be easily formed.

[Food Packaging Material]

The applications of the adhesive resin composition and laminate of the present invention are not particularly limited. However, the adhesive resin composition and the laminate can be preferably used in a packaging material, particularly a food packaging material. Therefore, the present invention encompasses an adhesive layer including the adhesive resin composition of the present invention, or a food packaging material including the laminate of the present invention. The food packaging material of the present invention includes the adhesive layer or the laminate in the present invention, and is therefore excellent in bond strength, thermoformability, biodegradability, and gas barrier properties. The food packaging material is not particularly limited, and examples thereof include containers for packaging foods such as meats, raw noodles, processed foods, black tea, coffee powders, coffee beans, and pickles. In a preferred embodiment of the present invention, the food packaging material is used in a garbage bag for organic waste, a container used in various events, a black tea pack, a coffee capsule, or the like, and particularly preferably used in a coffee capsule.

[Agricultural Film]

The adhesive resin composition and laminate of the present invention have degradability under natural environments, are excellent in gas barrier properties, and can be therefore preferably used in an agricultural film. Therefore, the present invention encompasses an agricultural film including an adhesive layer including the adhesive resin composition of the present invention, or the laminate of the present invention. Examples of the agricultural film include multi-films, films for fumigation, films for raising seedlings, and films for coating. Of these, the agricultural film is particularly useful as a film for fumigation.

Examples

The present invention is described in more detail below with reference to Examples and Comparative Examples. However, the present invention is not limited at all to these examples.

Each measurement method and each evaluation method in the following Examples and Comparative Examples are described below.

[Saponification Degree]

Each of the saponification degrees of PVA resins (B) was determined by a method described in JIS K 6726: 1994.

[Viscosity Average Polymerization Degree]

Each of the viscosity average polymerization degrees of the PVA resins (B) was determined by a method described in JIS K 6726: 1994. Specifically, each of the viscosity average polymerization degrees was calculated based on the following Expression from a limiting viscosity $[\eta]$ (l/g) measured in water at 30°C after resaponification and purification of each polymer. The polymerization degree is denoted as P in the following Expression.

$$P = ([\eta] \times 10^4/8.29)^{(1/0.62)}$$

[Breaking Elongation]

A sheet obtained by hot-press molding a biodegradable polyester resin (A) was cut to have a width of 15 mm and a length of 100 mm, and the breaking elongation thereof was measured according to ISO 527-1.

[Melting Point]

An aluminum pan (manufactured by TA Instrument) was allowed to contain 10 mg of adhesive resin composition pellets obtained in each of Examples and Comparative Examples, and sealed. The temperature of the pan was increased from -30°C to 220°C at a speed of 10°C/min, then rapidly decreased to -30°C at a speed of 10°C/min, and reincreased from -30°C to 220°C at a speed of 10°C/min to perform DSC measurement. A melting point Tm (°C) was determined from the temperature of the vertex of the peak of a temperature range between the start and end of the melt in the case of the second increase of the temperature in the obtained DSC curve.

[MFR]

The MFR of the biodegradable polyester resin (A) was measured at 200°C and under a load of 2.16 kg according to JIS K 7210: 2014.

[Mw, Mn]

The Mw and Mn of the biodegradable polyester resin (A) was measured using a method of analyzing a relative molecular mass by GPC analysis described below.

<Adjustment of Sample>

About 5 mg of the powder sample of the biodegradable polyester resin (A) was collected, and accurately weighed. Hexafluoroisopropanol (HFIP) to which 1 mL of 20 mM sodium trifluoroacetate was added per 0.1 mg of the sample was added to the collected sample, heated at 40°C for 3 hours, and dissolved. The GPC analysis was performed using this solution under the following conditions. A relative molecular mass distribution curve was calculated by converting a relative molecular mass, determined by an RI detector, by analysis software attached to an analysis apparatus. The analysis of the same sample was performed three times, and the average value thereof was regarded as an analysis result.

<GPC Analysis Conditions>

    Measurement apparatus: HLC-8320 GPC (manufactured by TOSOH)
    Analysis software: Empower (manufactured by Waters)
    Sample concentration: 0.1 mg/mL
    Mobile phase solvent: hexafluoroisopropanol to which 20 mM sodium trifluoroacetate was added
    Injection amount: 10 μL
    Flow rate: 0.2 mL/min
    Measurement temperature: 40°C
    Conditions under which sample is dissolved: 40°C and 3 hours
    Filter for filtration: 0.45 μm filter made of PTFE
    Column: GMMHR-H (S) (manufactured by TOSOH) (two columns)
    Detector: RI detector attached to apparatus

Standard sample for calibrating apparatus: PMMA (manufactured by Agilent)

[Thickness]

The thicknesses of films and laminates including the adhesive resin compositions in Examples and Comparative Examples, and each layer in the laminates were measured by a digital micrometer.

[Measurement of (Y/X)]

Y/X was measured as follows.
First, the pellets of the adhesive resin compositions obtained in Examples and Comparative Examples were preheated at 180°C for 5 minutes by using a compression forming machine, and then compression-formed for 30 seconds under a condition of a load of 50 kgf/cm$^2$ to obtain the films having a thickness of 300 $\mu$m and including the adhesive resin compositions. Each of the films was cut into a 10 mm square to obtain a sample for measurement of a mass, having a length of 10 mm, a width of 10 mm, and a thickness of 300 $\mu$m. In this case, a value determined based on the following Calculation Expression (2) was regarded as X.

$$X = \text{(mass of sample for measurement of mass)} \times \text{(rate (\% by mass) of polyvinyl alcohol resin (B) included in adhesive resin composition)}/100 \qquad (2)$$

The obtained sample for measurement of a mass (about 0.03 g) was put in a 50-cc screw pipe, and 20 mL of distilled water at 23°C was further added into the screw pipe. The screw pipe containing the sample for measurement of a mass and 20 mL of the distilled water was put in a hot air drying machine set at 80°C. After 30 minutes, confirmation that the distilled water was at 80°C was performed. Then, the screw pipe was further left to stand for 1 hour. Then, the sample was gently shaken with tweezers in order to remove an eluted component in pores and on surfaces. Then, the sample for measurement of a mass was taken from the screw pipe. The taken sample for measurement of a mass was further put in the hot air drying machine set to 80°C, and left to stand for 1 hour to obtain a sample that have been subjected to hot water treatment. In this case, a value determined based on the following Calculation Expression (3) was regarded as Y. In Examples and Comparative Examples, the component eluted in the hot water treatment was only the polyvinyl alcohol (B), and therefore, the value Y determined based on the following Calculation Expression (3) can be regarded as the mass of the polyvinyl alcohol (B) extracted in hot water.

$$Y = \text{(mass of sample for measurement of mass)} - \text{(mass of sample that has been subjected to hot water treatment)} \qquad (3)$$

Y/X indicating the rate of the reduction of the polyvinyl alcohol resin (B) included in the adhesive resin composition due to the hot water treatment was calculated using the obtained values of X and Y. The results are set forth in Table 2.

[SEM Images]

In Example 2, Example 13, and Comparative Example 1, the SEM images of the above-described samples that had been subjected to the hot water treatment were measured under the following conditions. The samples that had been subjected to the hot water treatment, and of which cross sections were subjected to vapor deposition of platinum were placed on the sample table of an SEM (VE9800, manufactured by KEYENCE CORPORATION), and observed under a condition of an acceleration voltage of 5 kV. Each SEM image was illustrated in Figs. 1 to 3. In Example 2 (Fig. 1) and Example 13 (Fig. 3), a phase including the biodegradable polyester resin (A) except a gap and a phase including the PVA resin (B) corresponding to the gap were confirmed to form a co-continuous structure. Moreover, a sea-island structure (sea: biodegradable polyester resin (A), and island: PVA resin (B)) was confirmed to partly coexist. The sea-island structure was confirmed to be formed in Comparative Example 1 (Fig. 2).

[Diameter of Hole]

In addition to Example 2, Example 13, and Comparative Example 1, SEM images were also obtained by the method described above in Examples 1, 4, and 5. Ten holes are randomly selected from each of the SEM images observed in Examples 1, 2, 4, and 5, and Comparative Example 1. The diameters of the holes were measured, and the average value of the diameters was regarded as a hole diameter. A plurality of holes may be connected in the case of such a structure as in Example 2 in Fig. 1. However, the diameters of holes which were circular in the SEM images were measured.

18

[Bond Strength of Adhesive Resin Composition to PVA Resin Layer]

The pellets of the adhesive resin compositions obtained in Examples and Comparative Examples were preheated at 180°C for 5 minutes by using a compression forming machine, and then compression-formed for 30 seconds under a condition of a load of 50 kgf/cm$^2$ to obtain the films (also referred to as "adhesive layers") including the adhesive resin compositions. The film including the adhesive resin composition (having a length of 150 mm, a width of 150 mm, and a thickness of 0.3 mm), a polyimide film ("Kapton Film" manufactured by DU PONT-TORAY CO., LTD., having a length of 75 mm, a width of 150 mm, and a thickness of 0.05 mm), and a film including a polyvinyl alcohol resin (also referred to as "PVA resin layer") ("Mowiflex C17" manufactured by Kuraray Co., Ltd., having a length of 150 mm, a width of 150 mm, and a thickness of 0.5 mm) were stacked in this order, and arranged in the central portion of a metallic spacer having an internal dimension of 150 mm × 150 mm and a thickness of 0.8 mm. The stacked films and metallic spacer were sandwiched between sheets made of polytetrafluoroethylene, further sandwiched between metal plates from the outsides, and compression-formed at 180°C under a load of 50 kgf/cm$^2$ for 30 seconds by using a compression forming machine to obtain a multilayer sheet including the adhesive layer and the PVA resin layer.

The multilayer sheet was cut to have a width of 25 mm to make a test piece for measuring bond strength. Peel strength between the adhesive layer and the PVA resin layer was measured according to JIS K 6854-1: 1999 under conditions of a peel angle of 90°, a tension speed of 50 mm/min, and an environmental temperature of 23°C by using a peel test machine ("AGS-X" manufactured by Shimadzu Corporation), and regarded as the bond strength of the adhesive resin composition. The bond strength was evaluated based on the following indices. The results are set forth in Table 2.

Excellent: peel strength of 20 N/25 mm or more
Good: peel strength of 10 N/25 mm or more and less than 20 N/25 mm
Fair: peel strength of 4 N/25 mm or more and less than 10 N/25 mm
Poor: peel strength of less than 4 N/25 mm

[Bond Strength of Adhesive Resin Composition to Biodegradable Resin Layer]

The pellets of the adhesive resin compositions obtained in Examples and Comparative Examples were preheated at 180°C for 5 minutes by using a compression forming machine, and then compression-formed for 30 seconds under a condition of a load of 50 kgf/cm$^2$ to obtain the films (also referred to as "adhesive layers") including the adhesive resin compositions. The film including the adhesive resin composition (having a length of 150 mm, a width of 150 mm, and a thickness of 0.3 mm), a polyimide film ("Kapton Film" manufactured by DU PONT-TORAY CO., LTD., having a length of 75 mm, a width of 150 mm, and a thickness of 0.05 mm), and a film including a biodegradable resin (also known as "biodegradable resin layer") ("Ingeo (registered trademark) biopolymer 2003D" manufactured by Natureworks, having a length of 150 mm, a width of 150 mm, and a thickness of 0.5 mm) were stacked in this order, and arranged in the central portion of a metallic spacer having an internal dimension of 150 mm × 150 mm and a thickness of 0.8 mm. The stacked films and metallic spacer were sandwiched between sheets made of polytetrafluoroethylene, further sandwiched between metal plates from the outsides, and compression-formed at 180°C under a load of 50 kgf/cm$^2$ for 30 seconds by using a compression forming machine to obtain a multilayer sheet including the adhesive layer and the biodegradable resin layer.

The multilayer sheet was cut to have a width of 25 mm to make a test piece for measuring bond strength. Peel strength between the adhesive layer and the biodegradable resin layer was measured according to JIS K 6854-1: 1999 under conditions of a peel angle of 90°, a tension speed of 50 mm/min, and an environmental temperature of 23°C by using a peel test machine ("AGS-X" manufactured by Shimadzu Corporation), and regarded as the bond strength of the adhesive resin composition. The bond strength was evaluated based on the following indices. The results are set forth in Table 2.

Excellent: peel strength of 55 N/25 mm or more
Good: peel strength of 15 N/25 mm or more and less than 55 N/25 mm
Fair: peel strength of 9 N/25 mm or more and less than 15 N/25 mm
Poor: peel strength of less than 9 N/25 mm

[Thermoformability]

Each of the laminates obtained in Examples and Comparative Examples was heated to 160°C by using a vacuum molding machine ("Formech 508DT" manufactured by Formech), and then formed in a capsule shape having a diameter of 5 cm and a depth of 3 cm. The obtained formed product was visually observed, and the thermoformability of the formed product was evaluated based on the following indices.

Good: forming is possible without any problem
Fair: a capsule shape is made, but wrinkles partly occur
Poor: forming is difficult

[Production Example 1]

[Production of Vinyl Alcohol Polymer (B1)]

In a 250-L reaction tank including a stirring machine, a nitrogen inlet, and an opening for adding an initiator, 630 parts by mass of vinyl acetate and 2520 parts by mass of methanol were loaded, and the temperature thereof was increased to 60°C, followed by replacing the interior of the system with nitrogen by nitrogen bubbling for 30 minutes. The internal temperature of the above-described flask was adjusted to 60°C, and 0.5 part by mass of AIBN was added to start polymerization. When the rate of polymerization reached 60% 3.2 hours after the start of the polymerization, 1000 parts by mass of methanol was added, followed by performing cooling to stop the polymerization. An unreacted vinyl acetate monomer was removed to make a methanol solution of PVAc. To 400 parts by mass of methanol solution of PVAc (100 parts by mass of PVAc in the solution) adjusted so that the concentration of the solution was 25% by mass by adding methanol to the obtained PVAc solution, 4.6 by mass (molar ratio [MR] of 0.01 to vinyl acetate unit in PVAc) of alkaline solution (10% by mass methanol solution of NaOH) was added, and the resultant was saponified at 40°C. After the addition of the alkali, the gelatinized product was ground by a grinding machine, and subjected to saponification reaction for 1 hour in total, followed by adding 1000 parts by mass of methyl acetate to neutralize a remaining alkali. To the PVA polymer which was a white solid and had been obtained by filtration after confirmation the end of the neutralization with the use of a phenolphthalein indicator, 1000 parts by mass of methanol was added, and the resultant was left unattended and washed at room temperature for 3 hours. A PVA polymer obtained by repeating the above-described washing operation three times and then performing centrifugal dehydration was left unattended and dried in a drying machine at 70°C for 2 days to obtain a vinyl alcohol polymer (B1) (referred to as "PVA 1") having a viscosity average polymerization degree of 300 and a saponification degree of 88.0% by mol.

[Production Examples 2 to 8]

[Production of Vinyl Alcohol Polymers (B2) to (B8)]

Vinyl alcohol polymers (B2) to (B8) (referred to as "PVAs 2 to 8") having polymerization degrees and saponification degrees set forth in Table 2 were obtained by changing the ratio between vinyl acetate and methanol, the polymerization condition of the rate of polymerization, and the saponification condition of the amount of the added alkaline solution.

[Production Example 9]

[Production of Ethylene-Vinyl Alcohol Copolymer (B9)]

A continuous polymerization tank including a reflux condenser, a raw material supply line, a reaction liquid takeout line, a thermometer, a nitrogen inlet, an ethylene inlet, and a stirring blade was used. Each of 626 L/hr of vinyl acetate, 216 L/hr of methanol, and 30.3 L/hr of a 1% methanol solution of n-propylperoxydicarbonate as an initiator was continuously supplied to a continuous polymerization tank by using a metering pump. The pressure of ethylene in the polymerization tank was adjusted to be 0.69 MPa. A polymerization liquid was continuously taken out of the continuous polymerization tank so that a liquid level in the polymerization tank was constant. The rate of polymerization in the outlet of the continuous polymerization tank was adjusted to be 67%. Residence time in the continuous polymerization tank was 5 hours. The temperature of the outlet of the continuous polymerization tank was 60°C. The polymerization liquid was collected from the continuous polymerization tank, remaining vinyl acetate was removed by introducing methanol vapor into the polymerization liquid while heating the polymerization liquid to 75°C in a warm water bath, and the methanol solution of an ethylene-vinyl ester copolymer was obtained. Then, saponification reaction was performed at 40°C and a system water content of 0.5% in a saponification step for 1 hour by using sodium hydroxide as a saponification catalyst at a molar ratio of 0.02 with respect to the ethylene-vinyl ester copolymer. The obtained polymer was immersed in methanol, and washed. Then, a solvent was removed by centrifugation, and drying was then performed to obtain an ethylene-vinyl alcohol copolymer (B9) in which the content of an ethylene unit was 10% by mol, and of which the viscosity average polymerization degree was 400, and the saponification degree was 98.5% by mol.

[Example 1]

<Adhesive Resin Composition>

Melt-kneading of 80 parts by mass of polybutylene adipate terephthalate ("Ecoflex C1200" manufactured by BASF, melting point of 118°C, breaking elongation of 1012%, MFR of 15.8 g/10 min, Mw of 72000, Mn of 24500) as the biodegradable polyester resin (A) and 20 parts by mass of PVA 1 obtained in Production Example 1 as the PVA resin (B) was performed under the following conditions by using a twin screw extruder KZW15-45MG (manufactured by TECHNOVEL CORPORATION, D = 15 mm φ, L/D = 45). The molten kneaded product was extruded from a strand nozzle, and the obtained strand was cooled and then cut to obtain the pellets of the adhesive resin composition. When a specific mechanical energy (SME) at the time of the melt-kneading was measured, the specific mechanical energy was 526 kJ/kg.

[Table 1]

| Temperature profile | | | | | | |
|---|---|---|---|---|---|---|
| Cylinder temperature [°C] | | | | | | |
| C1 | C2 | C3 | C4 | C5 | C6 | Die |
| 50 | 120 | 180 | 180 | 180 | 135 | 125 |

Screw speed: 250 rpm
Discharge: 3.5 kg/h
Operating method: co-rotating complete intermeshing type

<Laminate>

A laminate with three kinds of five layers, in which a biodegradable resin layer, an adhesive layer, a polyvinyl alcohol resin layer, an adhesive layer, and a biodegradable resin layer were laminated in the order mentioned, was produced by the following method.
Each of the pellets of the adhesive resin composition described above, the pellets of a polyvinyl alcohol resin composition (a composition obtained by kneading 100 parts by mass of ethylene-vinyl alcohol copolymer (B9) and 67 parts by mass of trehalose by a twin screw extruder), and the pellets of a polylactic acid (Ingeo (registered trademark), biopolymer 2003D, manufactured by Natureworks) was put in the hopper of a single screw extruder (VGM25-28EX, manufactured by G.M. ENGINEERING), and coextruded at a flow rate of 5 kg/h by using a feed block die to obtain the laminate with three kinds of five layers, having a width of 20 cm. In such a case, each set cylinder temperature was as follows.

(Cylinder Temperature)

Adhesive layer: 180°C, polyvinyl alcohol resin layer: 210°C, biodegradable resin layer: 220°C
The configuration of the obtained laminate was polylactic acid layer/adhesive layer/polyvinyl alcohol resin layer/adhesive layer/polylactic acid layer = 250 μm/20 μm/30 μm/20 μm/250 μm (thicknesses) from the outside.

[Examples 2 to 10, 12, And 13, And Comparative Examples 1 to 4]

An adhesive resin composition and a laminate were obtained in a manner similar to that in Example 1 except that the kind and blending amount of each of a biodegradable polyester resin (A) and a PVA resin (B) in the case of producing the adhesive resin composition were changed according to Table 2. In Table 2, PCL represents a polycaprolactone ("Capa 6800" manufactured by Ingevity, melting point of 60°C, breaking elongation of 800%, MFR of 2.4 g/10 min), and PLA represents a polylactic acid ("Ingeo (trademark) Biopolymer 2003D" manufactured by Nature Works, melting point of 153°C, breaking elongation of 6%, MFR of 6 g/10 min). Moreover, PBATs, PCLs, and PLAs used in Examples and Comparative Examples satisfy standards for biodegradability, specified in EN 13432, ASTM 6400, and ISO 14855. Furthermore, all of the biodegradable resin layers, the adhesive layers, and the polyvinyl alcohol resin layers in the laminates obtained in Examples and Comparative Examples were layers satisfying the standard for biodegradability according to ISO 14855.

[Example 11]

An adhesive resin composition and a laminate were obtained in a manner similar to that in Example 1 except that the blending amount and specific mechanical energy (SME) of each of a biodegradable polyester resin (A) and a PVA resin (B) in the case of producing the adhesive resin composition were changed according to Table 2. In the change of the specific mechanical energy (SME) according to Table 2, a discharge amount was changed to 2.0 kg/h.

According to the method described above, (Y/X) and peel strengths from the PVA resin layer and the biodegradable resin layer in each adhesive resin composition obtained in Examples and Comparative Examples were measured to evaluate bond strengths. Thermoformability was evaluated for each laminate obtained in Examples and Comparative Examples. The results are set forth in Table 2. In Table 2, *1 denotes a case in which a film (adhesive layer) including an adhesive resin composition was broken before peeling, that is, cohesion failure of the film occurred in a peel test. Values in peel strength boxes with *1 indicate strengths at the time of the cohesion failure, and the peel strengths are greater values. Therefore, each peel strength in the case of the cohesion failure is expressed as "value<"

[Table 2]

| | | Kind | Polymeri-zation degree | Saponifi-cation degree (% by mol) | Example 1 | Example 2 | Example 3 | Example 4 | Example 5 | Example 6 | Example 7 | Example 8 | Example 9 | Example 10 | Example 11 | Example 12 | Example 13 | Comp. Example 1 | Comp. Example 2 | Comp. Example 3 | Comp. Example 4 |
|---|---|---|---|---|---|---|---|---|---|---|---|---|---|---|---|---|---|---|---|---|---|
| Biodegradable polyester resin (A) | PBAT | | | | 80 | 70 | 65 | 60 | 50 | 50 | 80 | 70 | | | 70 | 75 | 60 | 70 | 80 | 70 | 40 |
| | PCL | | | | | | | | | | | | 70 | | | | | | | | |
| | PLA | | | | | | | | | | | | | 70 | | | | | | | |
| PVA resin (B) | | PV-A1 | 300 | 88 | 20 | 30 | 35 | 40 | 50 | | | | | 30 | 30 | 30 | | | | | | |
| | | PVA2 | 300 | 83 | | | | | | | | | | | | 25 | 40 | | | | 60 |
| | | PV-A3 | 300 | 80 | | | | | | 50 | | | | | | | | | | | |
| | | PV-A4 | 550 | 74 | | | | | | | | | | | | | | 30 | | | |
| | | PV-A5 | 550 | 82 | | | | | | | 20 | | | | | | | | | | |
| | | PV-A6 | 500 | 88 | | | | | | | | 30 | | | | | | | | | |
| | | PV-A7 | 500 | 98 | | | | | | | | | | | | | | | | 30 | |
| | | PV-A8 | 800 | 88 | | | | | | | | | | | | | | | 20 | | |
| | SME | | | | 526 | 656 | - | - | - | - | - | - | - | - | 947 | - | - | - | - | - | - |
| | Y/X | | | | 0.63 | 0.84 | 0.77 | 0.92 | 0.94 | 0.94 | 0.35 | 0.37 | 0.68 | 0.85 | 0.69 | 0.66 | 0.98 | 0.23 | 0.18 | 0.03 | 1 |
| | Diameter of hole (μm) | | | | 0.9 | 0.9 | - | 0.9 | 0.8 | - | - | - | - | - | - | - | - | 1.1 | - | - | - |
| Peel strength from PVA layer | Peel strength (N/25 mm) | | | | 20 | 38 | 26 | 25 < *1 | 28 < *1 | 35 < *1 | 6.1 | 9 | 11 | 4.1 | 4 | 4 | 23 < *1 | 3.6 | 3.3 | 1.1 | 30< *1 |
| | Evaluation of bond strength | | | | Excellent | Excellent | Excellent | Excellent | Excellent | Excellent | Fair | Fair | Good | Fair | Fair | Fair | Excellent | Poor | Poor | Poor | Good |

(continued)

| | | Example 1 | Example 2 | Example 3 | Example 4 | Example 5 | Example 6 | Example 7 | Example 8 | Example 9 | Example 10 | Example 11 | Example 12 | Example 13 | Comp. Example 1 | Comp. Example 2 | Comp. Example 3 | Comp. Example 4 |
|---|---|---|---|---|---|---|---|---|---|---|---|---|---|---|---|---|---|---|
| Peel strength from PLA layer | Peel strength (N/25 mm) | 54 | 51 | 45 | 60 < *1 | 62 < *1 | 58 < *1 | 51 | 52 | 46 | 48 < *1 | 50 | 40 | 59 < *1 | 48 | 43 | 39 | 8 |
| | Evaluation of bond strength | Good | Good | Good | Excellent | Excellent | Excellent | Good | Good | Good | Good | Good | Excellent | Excellent | Good | Good | Good | Poor |
| | Evaluation of thermoformability | Good | Good | Good | Good | Good | Good | Good | Good | Fair | Good | Good | Good | Good | Good | Good | Good | Fair |

As set forth in Table 2, the evaluations of the bond strengths of the adhesive resin compositions in Examples 1 to 13 to the PVA resin layers and the biodegradable resin layers were confirmed to be higher than those in Comparative Examples 1 to 4. Thus, the adhesive resin composition of the present invention is excellent in bond strength.

It was further confirmed that the laminates in Examples 1 to 13 were able to be easily formed in desired shapes, and, in particular, the laminates in Examples 1 to 8, 10, and 11 to 13 were able to be formed in desired shapes without occurrence of wrinkles or the like. Thus, the laminate including the adhesive resin composition of the present invention is excellent in thermoformability.

[Example 14]

<Laminate>

A laminate with three kinds of five layers, in which a biodegradable resin layer, an adhesive layer, a polyvinyl alcohol resin layer, an adhesive layer, and a biodegradable resin layer were laminated in the order mentioned, was produced by the following method.

Each of the pellets of the adhesive resin composition obtained in Example 2, the pellets of a polyvinyl alcohol resin composition (a composition obtained by kneading 100 parts by mass of ethylene-vinyl alcohol copolymer (B9) and 67 parts by mass of trehalose by a twin screw extruder), and the pellets of polybutylene adipate terephthalate (PBAT) ("Ecoflex C1200" manufactured by BASF) was put in the hopper of a single screw extruder (VGM25-28EX, manufactured by G.M. ENGINEERING), and coextruded at a flow rate of 1 kg/h by using a feed block die to obtain the laminate with three kinds of five layers, having a width of 15 cm. In such a case, each set cylinder temperature was as follows.

(Cylinder Temperature)

Adhesive layer: 180°C, polyvinyl alcohol resin layer: 210°C, biodegradable resin layer: 180°C

The configuration of the obtained laminate was PBAT layer/adhesive layer/polyvinyl alcohol resin layer/adhesive layer/PBAT layer = 35 $\mu$m/5 $\mu$m/15 $\mu$m/5 $\mu$m/35 $\mu$m (thicknesses) from the outside.

The thermoformability of the laminate obtained in Example 14 was evaluated by a similar method except that a heating temperature was changed from "160°C" to "110°C" in the evaluation of [Thermoformability] described above.

[Table 3]

| | | | | Example 14 |
|---|---|---|---|---|
| Biodegradable polyester resin (A) | PBAT | | | 70 |
| PVA resin (B) | Kind | Polymerization degree | Saponification degree (% by mol) | |
| | PVA1 | 300 | 88 | 30 |
| | SME | | | 656 |
| | Y/X | | | 0.84 |
| | Diameter of hole ($\mu$m) | | | 0.9 |
| Evaluation thermoformability | | | | Good |

As set forth in Table 3, the laminate in Example 14 can be formed in a desired shape without occurrence of wrinkles or the like, and is therefore excellent in thermoformability. All of the biodegradable resin layer (PBAT layer), the adhesive layer, and the polyvinyl alcohol resin layer in the laminate in Example 12 were layers satisfying the standard for biodegradability according to ISO 14855. Moreover, the laminate in Example 14 has high bond strengths to the PVA resin layer and the biodegradable resin layer (PBAT layer).

**Claims**

1. An adhesive resin composition comprising a biodegradable polyester resin (A) and a polyvinyl alcohol resin (B), wherein
   Expression (1):

$$0.30 \leq Y/X \leq 0.99 \qquad (1)$$

[wherein, X represents a mass of the polyvinyl alcohol resin (B) included in a film comprising the adhesive resin composition and having a thickness of 300 $\mu$m, and Y represents a mass of the polyvinyl alcohol resin (B) extracted in hot water in extraction treatment of a soluble element by immersing the film in pure water at 80°C for 1 hour]
is satisfied.

2. The adhesive resin composition according to claim 1, wherein a saponification degree of the polyvinyl alcohol resin (B) is 75 to 96% by mol.

3. The adhesive resin composition according to claim 1 or 2, wherein the biodegradable polyester resin (A) has a breaking elongation of 50% or more, measured according to ISO 527-1.

4. The adhesive resin composition according to any one of claims 1 to 3, wherein the polyvinyl alcohol resin (B) has a viscosity average polymerization degree of 100 to 5000.

5. The adhesive resin composition according to any one of claims 1 to 4, wherein the biodegradable polyester resin (A) has a melting point of 70°C or more.

6. The adhesive resin composition according to any one of claims 1 to 5, wherein the biodegradable polyester resin (A) comprises an aromatic-aliphatic copolyester resin.

7. The adhesive resin composition according to claim 6, wherein the aromatic-aliphatic copolyester resin is polybutylene adipate terephthalate.

8. The adhesive resin composition according to any one of claims 1 to 7, wherein a hole formed in extraction treatment of a soluble element by immersing a film comprising the adhesive resin composition and having a thickness of 300 $\mu$m in pure water at 80°C for 1 hour has a diameter of 10 $\mu$m or less.

9. An adhesive resin composition comprising a biodegradable polyester resin (A) and a polyvinyl alcohol resin (B), wherein the adhesive resin composition comprises a co-continuous structure formed of at least a phase consisting of the biodegradable polyester resin (A) and a phase consisting of the polyvinyl alcohol resin (B).

10. A laminate comprising an adhesive layer comprising the adhesive resin composition according to any one of claims 1 to 9.

11. The laminate according to claim 10, comprising a biodegradable resin layer, the adhesive layer, and a polyvinyl alcohol resin layer in order mentioned.

12. The laminate according to claim 11, wherein all of the biodegradable resin layer, the adhesive layer, and the polyvinyl alcohol resin layer satisfy a standard for biodegradability according to ISO 14855.

13. A food packaging material comprising an adhesive layer comprising the adhesive resin composition according to any one of claims 1 to 9, or the laminate according to any one of claims 10 to 12.

14. An agricultural film comprising an adhesive layer comprising the adhesive resin composition according to any one of claims 1 to 9, or the laminate according to any one of claims 10 to 12.

FIG. 1

FIG. 2

FIG. 3

## INTERNATIONAL SEARCH REPORT

| International application No. |
| --- |
| **PCT/JP2023/044870** |

### A. CLASSIFICATION OF SUBJECT MATTER

*C08L 67/00*(2006.01)i; *B32B 27/00*(2006.01)i; *B32B 27/30*(2006.01)i; *B32B 27/36*(2006.01)i; *B65D 65/40*(2006.01)i; *B65D 65/46*(2006.01)i; *C08F 8/12*(2006.01)i; *C08L 29/04*(2006.01)i; *C08L 67/02*(2006.01)i; *C08L 101/16*(2006.01)i; *C09J 129/04*(2006.01)i; *C09J 167/00*(2006.01)i; *C09J 167/02*(2006.01)i

FI: C08L67/00 ZBP; B32B27/00 D; B32B27/30 102; B32B27/36; B65D65/40 D; B65D65/46; C08F8/12; C08L29/04; C08L29/04 B; C08L67/02 ZBP; C08L101/16; C09J129/04; C09J167/00; C09J167/02

According to International Patent Classification (IPC) or to both national classification and IPC

### B. FIELDS SEARCHED

Minimum documentation searched (classification system followed by classification symbols)

C08L67/00; B32B27/00; B32B27/30; B32B27/36; B65D65/40; B65D65/46; C08F8/12; C08L29/04; C08L67/02; C08L101/16; C09J129/04; C09J167/00; C09J167/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2014-118541 A (THE NIPPON SYNTHETIC CHEMICAL INDUSTRY CO., LTD.) 30 June 2014 (2014-06-30)<br>claims, paragraph [0069], examples | 1-9, 13-14 |
| X | JP 2004-256637 A (JAPAN VAM & POVAL CO., LTD.) 16 September 2004 (2004-09-16)<br>claims, paragraph [0030] | 1-5, 8-14 |
| X | JP 2003-113254 A (ASAHI KASEI KABUSHIKI KAISHA) 18 April 2003 (2003-04-18)<br>claims, comparative examples | 1-5, 8-9 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/044870**

| Patent document cited in search report | | | Publication date (day/month/year) | Patent family member(s) | | | Publication date (day/month/year) |
|---|---|---|---|---|---|---|---|
| JP | 2014-118541 | A | 30 June 2014 | US | 2015/0337129 | A1 | |
| | | | | claims, paragraph [0142], examples | | | |
| | | | | EP | 2937386 | A1 | |
| JP | 2004-256637 | A | 16 September 2004 | (Family: none) | | | |
| JP | 2003-113254 | A | 18 April 2003 | (Family: none) | | | |

Form PCT/ISA/210 (patent family annex) (July 2022)

**REFERENCES CITED IN THE DESCRIPTION**

**Patent documents cited in the description**

- JP 2022200517 A
- JP 2023104831 A
- JP 2013212682 A